(19) Europäisches Patentamt
European Patent Office
Office européen des brevets

(11) **EP 4 116 886 A1**

(12) **EUROPEAN PATENT APPLICATION**

(43) Date of publication:
**11.01.2023 Bulletin 2023/02**

(21) Application number: **22177784.0**

(22) Date of filing: **08.06.2022**

(51) International Patent Classification (IPC):
**G06N 5/00** *(2006.01)*      **G06N 7/00** *(2006.01)*

(52) Cooperative Patent Classification (CPC):
**G06N 5/003; G06N 7/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.06.2021 JP 2021102484**

(71) Applicant: **FUJITSU LIMITED**
**Kawasaki-shi, Kanagawa 211-8588 (JP)**

(72) Inventors:
• **Tamura, Hirotaka**
**Yokohama-shi, Kanagawa, 223-0066 (JP)**
• **Kanda, Kouichi**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **DATA PROCESSING APPARATUS, PROGRAM OF PROCESSING DATA, AND METHOD OF PROCESSING DATA**

(57)    A computer of searching for a combination of state variables with which an evaluation function including the state variables becomes a local minimum or maximum, the computer including: a memory storing a first coefficient indicating a magnitude of interaction between k state variables in a kth order term of the evaluation function; and a processor that performs: calculating a first local field indicating a change amount of the kth order term when a first state variable among the k state variables changes by the first coefficient and a first variable obtained by the k state variables and second coefficients; and determining whether to allow a change in the first state variable based on a result of comparison between a predetermined value and a product of a sum of the first local field and a second local field indicating a change amount of quadratic and lower-order terms of the evaluation function.

FIG. 1

**Description**

FIELD

The embodiments discussed herein are related to a data processing apparatus, a computer-readable recording medium storing a program, and a method of processing data.

BACKGROUND

As an apparatus that calculates a large-scale discrete optimization problem which is not easily handled by a Neumann-type computer, there is an Ising machine (also referred to as a Boltzmann machine) using an Ising-type evaluation function (also referred to as an energy function or the like).

The Ising machine converts a discrete optimization problem into an Ising model representative of a behavior of a spin of a magnetic body. Based on the Markov chain Monte Carlo method such as a simulated annealing method or a replica exchange method (also referred to as, for example, a parallel tempering method), the Ising machine searches for a state of the Ising model that sets a value of the Ising type evaluation function (corresponding to energy) to a local minimum. A state having the minimum value out of the local minimums of the evaluation function is an optimal solution. By changing the sign of the evaluation function, the Ising machine is also able to search for a state that sets the value of the evaluation function to a local maximum. The state of the Ising model may be expressed by a combination of values of a plurality of state variables. As the value of each of the state variables, 0 or 1 may be used.

The Ising-type evaluation function is defined by, for example, a function of a quadratic form such as Expression (1) below.

$$E = -\sum_{i=1}^{N}\sum_{j>i}^{N} W_{ij}x_i x_j - \sum_{i=1}^{N} b_i x_i \qquad (1)$$

The first term on the right side is the total of products each obtained from values of two state variables and a weight value (indicative of the intensity of interaction between the two state variables) in one of all the combinations, without omission and duplication, of N state variables in the Ising model. Here, $x_i$ is a state variable with an identification number i, $x_j$ is a state variable with an identification number j, and $W_{ij}$ is a weight value indicative of the intensity of interaction between the state variables with the identification numbers i and j. The second term on the right side is the total sum of products each obtained from a bias coefficient and a state variable for one of the identification numbers. Here, $b_i$ indicates a bias coefficient for the identification number = i.

An energy change amount ($\Delta E_i$) due to a change in the value of $x_i$ is represented by Expression (2) below.

$$\Delta E_i = -\Delta x_i \left( \sum_{j}^{N} W_{ij}x_j + b_i \right) = -\Delta x_i h_i \qquad (2)$$

In Expression (2), for example, $\Delta x_i$ is -1 when $x_i$ which is a value of 0 or 1 changes from 1 to 0, whereas $\Delta x_i$ is 1 when $x_i$ changes from 0 to 1. Here, $h_i$ is referred to as a local field and $\Delta E_i$ is the product of $h_i$ and a sign (+1 or -1) depending on $\Delta x_i$. For this reason, $h_i$ may also be referred to as a variable that represents the energy change amount or a variable that determines the energy change amount.

For example, in the case where $\Delta E_i$ is smaller than a noise value obtained based on a random number and a value of a temperature parameter, a process of updating the value of $x_i$ to generate a state transition and also updating the local fields is repeated.

The related-art Ising machine uses an Ising-type evaluation function defined by a quadratic-form function as represented by Expression (1) above. To allow application of the Ising machine to a wider variety of discrete optimization problems, it is conceivable to use an evaluation function including a cubic or higher-order term (hereafter referred to as a higher-order evaluation function).

As a calculation technique for a discrete optimization problem using a higher-order evaluation function, a technique has been proposed in which, by adding a new independent variable similar to a state variable, a higher-order evaluation function is converted into a quadratic evaluation function and calculated.

Also, a technique has been proposed in which a constraint term of an inequality constraint defined by a linear-form function remaining in the linear form is used and a solution is obtained by an Ising machine.

Examples of the related art include as follows: Japanese Laid-open Patent Publication No. 2020-204928.

Examples of the related art also include as follows: R. Xia, et al. "Electronic Structure Calculations and the Ising Hamiltonian", J. Phys. Chem. B 2018, 122, 13, 3384-3395, 2017.

SUMMARY

TECHNICAL PROBLEM

With the related-art technique in which the independent variable is added and the higher-order evaluation function is converted into the quadratic evaluation function, the number of independent variables increases as the degree of higher-order terms increases. When the number of independent variables increases, the size of the solvable problem decreases, and the solution space increases. Consequently, it may be difficult to solve a problem.

In one aspect, an object of the present disclosure is to provide a data processing apparatus, a program, and a method of processing data with which a discrete optimization problem represented by a higher-order evaluation function may be calculated without increasing the number of independent variables.

SOLUTION TO PROBLEM

According to an aspect of the embodiments, there is provided a data processing apparatus of searching for a combination of values of a plurality of state variables with which a value of an evaluation function which includes the plurality of state variables becomes a local minimum or a local maximum. In an example, the data processing apparatus includes: a storage device configured to store a first coefficient indicating a magnitude of interaction between k state variables (k is an integer of greater than or equal to three) out of the plurality of state variables included in a kth order term of the evaluation function; and a processor configured to perform processing including: calculating a first local field indicative of a change amount of the kth order term in a case where a value of a first state variable out of the k state variables changes based on a value of a first variable and the first coefficient read from the storage device, the value of the first variable being a value obtained based on values of the k state variables and a plurality of second coefficients respectively representative of influences of the k state variables on the first variable; and determining, based on a result of comparison, whether to allow a change in the value of the first state variable, the result of the comparison being obtained by comparing between a predetermined value and a product of a sum of the first local field and a second local field indicative of a change amount of quadratic and lower-order terms of the evaluation function in the case where the value of the first state variable changes and a change amount of the first state variable.

ADVANTAGEOUS EFFECTS OF INVENTION

In the one aspect, according to the present disclosure, the discrete optimization problem represented by a higher-order evaluation function may be calculated without increasing the number of independent variables.

BRIEF DESCRIPTION OF DRAWINGS

FIG. 1 illustrates an example of a data processing apparatus and a method of processing data according to a first embodiment;
FIG. 2 illustrates an example of k auxiliary variables used corresponding to k state variables;
FIG. 3 illustrates the relationship between $y_{jn}$ and $q_{jn}$;
FIG. 4 is a block diagram illustrating a hardware example of a data processing apparatus according to a second embodiment;
FIG. 5 is a block diagram illustrating a functional example of the data processing apparatus;
FIG. 6 illustrates an example of matrix information stored in a storage unit;
FIG. 7 is a flowchart illustrating a flow of an example of the method of processing data;
FIG. 8 is a flowchart illustrating a flow of an example of a procedure of the initialization process;
FIG. 9 is a flowchart illustrating a flow of an example of a procedure of an updating process;
FIG. 10 illustrates an example of a data processing apparatus according to a third embodiment;
FIG. 11 illustrates a configuration an example of a field-programmable gate array (FPGA);
FIG. 12 illustrates an example in which an auxiliary variable having a value of two bits is used;

FIG. 13 illustrates an example in which spin variables are used as the state variables;

FIG. 14 illustrates an example in which the number of the auxiliary variables used for the state variables that are k spin variables included in the kth term is one;

FIG. 15 illustrates an example in which a plurality of auxiliary variables are used in a plurality of layers; and

FIG. 16 illustrates an example of calculation results.

## DESCRIPTION OF EMBODIMENTS

Hereinafter, the embodiments of the present disclosure will be described with reference to the drawings.

(First Embodiment)

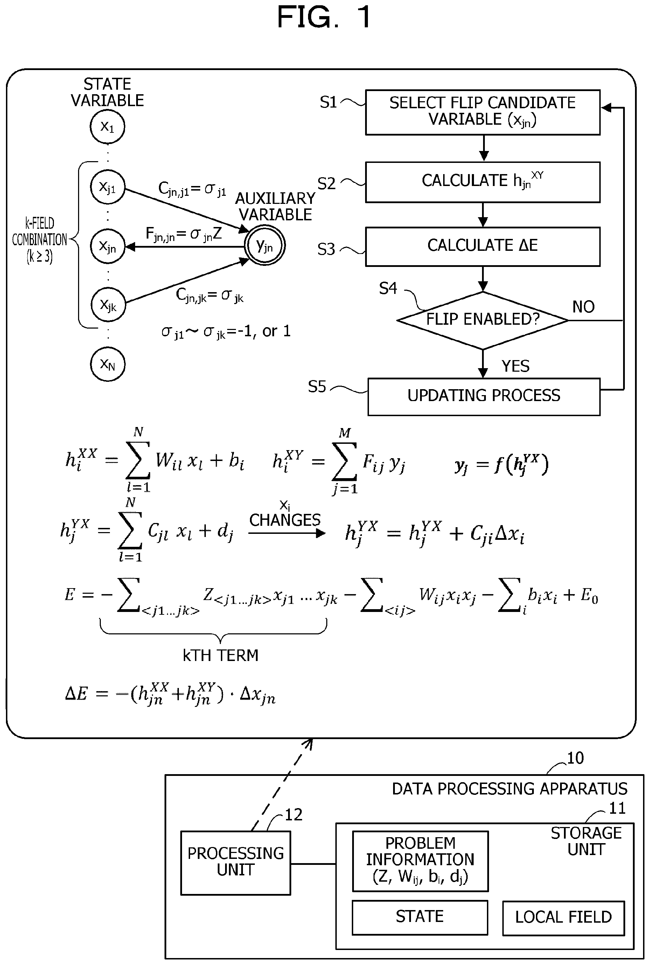

FIG. 1 illustrates an example of a data processing apparatus and a method of processing data according to a first embodiment.

A data processing apparatus 10 according to the first embodiment is an apparatus that searches for a combination of values of a plurality of state variables with which a value of a higher-order evaluation function as described above becomes a local minimum or a local maximum.

In the case where a constraint condition to be satisfied by a problem is given by a complex desired combination of various conditions, the constraint condition may be given in a satisfiability problem (SAT). In this case, for example, it is desirable that the number of logical clauses unable to be satisfied by the SAT become the minimum value. Although all SATs may be converted into a 3-SAT in which the number of literals is three, the related-art Ising machine which is only able to handle an evaluation function of the quadratic form is able to directly solve only up to a 2-SAT. As described below, the data processing apparatus 10 according to the present embodiment calculates a local field representative of a change amount (the energy change amount) of a higher-order term due to a change in values of the state variables included in the higher-order term by using an auxiliary variable. With this technique, the data processing apparatus 10 enables calculation of a problem equal to or higher than the 3-SAT, for example.

A higher-order evaluation function may be represented by, for example, the following Expression (3).

$$E = - \sum_{<j_1 \ldots j_k>} Z_{<j1 \ldots jk>} x_{j1} \ldots x_{jk} - \tag{3}$$

$$\sum_{<ij>} W_{ij} x_i x_j - \sum_i b_i x_i + E_0$$

On the right side, the first term is a kth ($k \geq 3$) term (higher-order term), and the second and subsequent terms are quadratic and lower-order terms. Out of N state variables, $x_{j1}$ to $x_{jk}$ are state variables that are included in the kth term and forms a k-field combination. In Expression (3), $Z_{<j_1 \ldots jk>}$ is a coefficient representative of the magnitude of interaction between $x_{j1}$ to $x_{jk}$ (for example, it may also be said to be a coefficient representative of the strength of combination of the k-field combination).

In the case where the constraint condition of the SAT type discrete optimization problem is handled, in the higher-order term, the part representative of the product of $x_{j1}$ to $x_{jk}$ may be the product of positive and negative literals. For example, in the case where k = 4 and $x_{j1} = x_1$, $x_{j2} = x_2$, $x_{j3} = x_3$, $x_{j4} = x_4$, the product such as Expression (4) below may also be handled as a higher-order term.

$$\overline{x_1} x_2 \overline{x_3} x_4 = (1 - x_1) x_2 (1 - x_3) x_4 \tag{4}$$

IN Expression (4), state variables ($x_1$, $x_3$) with a bar are negative literals. In the case of such a higher-order term, when the logical clause of Expression (5) below is not satisfied, for example, in the case of Expression (6) below, $Z_{<j1 \ldots jk>}$ contributes to E (energy) (cost is generated).

$$x_1 \lor \overline{x_2} \lor x_3 \lor \overline{x_4} \tag{5}$$

$$\overline{x_1} \land x_2 \land \overline{x_3} \land x_4 = 1 \tag{6}$$

It is assumed that, in the case where the logical clause of Expression (5) is not satisfied, $Z_{1234}$ is generated as $Z<_{j1...jk>}$. A biquadratic term that generates such $Z_{1234}$ may be represented as $Z_{1234}(1-x_1)x_2(1-x_3)x_4$. In the case where the value of each of $x_1$ to $x_4$ changes, a corresponding local field ($h_1^{XY}$ to $h_4^{XY}$) indicative of a change amount of the above biquadratic term may be represented as follows by using a corresponding auxiliary variable ($y_1$ to $y_4$).

For example, the change amount of the biquadratic term in the case where the value of $x_1$ changes indicated by $h_1^{XY}$ may be represented as $h_1^{XY} = -Z_{1234}y_1$ by using $y_1$ that is $y_1 = x_2(1-x_3)x_4$. The change amount of the biquadratic term in the case where the value of $x_2$ changes indicated by $h_2^{XY}$, may be represented as $h_2^{XY} = +Z_{1234}y_2$ by using $y_2$ that is $y_2 = (1-x_1)(1-x_3)x_4$. The change amount of the biquadratic term in the case where the value of $x_3$ changes indicated by $h_3^{XY}$ may be represented as $h_3^{XY} = -Z_{1234}y_3$ by using $y_3$ that is $y_3 = (1-x_1)x_2x_4$. The change amount of the biquadratic term in the case where the value of $x_4$ changes indicated by $h_4^{XY}$ may be represented as $h_4^{XY} = +Z_{1234}y_4$ by using $y_4$ that is $y_4 = (1-x_1)x_2(1-x_3)$.

A value obtained by multiplying $h_i^{XY}$ by $-\Delta x_i$ is an increase in energy with the biquadratic term in the case where $y_i = 1$.

As described above, when all the literals other than $x_i$ generating $h_i^{XY}$ out of the literals of k state variables included in the kth term are 1, $h_i^{XY}$ is a value obtained by adding an appropriate sign to $Z<_{j1...jk>}$. In contrast, when even one of the literals other than $x_i$ is false (0), $h_i^{XY}$ is 0.

A value to which an appropriate sign is added means that a positive sign is added in the case where $x_i$ that generates $h_i^{XY}$ is a positive literal in the kth order term and a negative sign is added in the case where $x_i$ that generates $h_i^{XY}$ is a negative literal in the kth term.

Using the auxiliary variables as described above allows calculation of $h_i^{XY}$ that is the local field indicative of the change amount of the kth term in the case where the values of the state variables included in the kth term change.

Since the auxiliary variables are obtained from the values of the state variables, the auxiliary variables are not independent variables and do not increase a solution searching space.

The data processing apparatus 10 illustrated in FIG. 1 calculates, by using three types of local fields ($h_i^{XX}$, $h_i^{XY}$, $h_j^{YX}$) including the above-described $h_i^{XY}$ and the auxiliary variables as described above, a change amount ($\Delta E$) of the value of the evaluation function of Expression (3) in the case where the value of $x_i$ changes and determines whether to allow a change in a value of $x_i$.

The data processing apparatus 10 according to the first embodiment includes a storage unit 11 and a processing unit 12.

The storage unit 11 is, for example, a volatile storage device including an electronic circuit such as a dynamic random-access memory (DRAM) or a non-volatile storage device including an electronic circuit such as a hard disk drive (HDD) or a flash memory. The storage unit 11 may include an electronic circuit such as a register.

The storage unit 11 stores problem information of the discrete optimization problem, values of a plurality of (hereafter, N) state variables included in the evaluation function of Expression (3), and values of $h_i^{XX}$, $h_i^{XY}$, $h_j^{YX}$.

The problem information includes, for example, a coefficient ($d_j$), which will be described later, other than $Z<_{j1...jk>}$ (simply represented as Z in FIG. 1), $W_{ij}$, and $b_i$ represented in Expression (3).

The local field $h_i^{XX}$ is a local field representative of the change amount of the quadratic and lower-order terms of the value of the evaluation function of Expression (3) in the case where the value of $x_i$ changes and corresponds to $h_i$ of Expression (2). For example, $h_i^{XX}$ may be represented by Expression (7) below.

$$h_i^{XX} = \sum_{l=1}^{N} W_{il}x_l + b_i \qquad (7)$$

The local field $h_j^{YX}$ is a first local field for the kth term and indicates a local field that N state variables generate for the auxiliary variable. The local field $h_j^{YX}$ may be represented by Expression (8) below.

$$h_j^{YX} = \sum_{l=1}^{N} C_{jl}x_l + d_j \qquad (8)$$

In Expression (8), $C_{jl}$ is a coefficient representative of the influence of the $x_l$ on the jth auxiliary variable. Assuming that the state variables not included in the kth term do not influence the auxiliary variable used for this kth term, $C_{jl}$ related to these state variables is 0.

As described above, in the case where the kth term is represented by the product of positive and negative literals, the $C_{jn,j1}$ to $C_{jn,jk}$ representative of the influence of the $x_{j1}$ to $x_{jk}$ included in the kth term on $y_{jn}$ may be represented by $\sigma_{j1}$ to $\sigma_{jk}$ being appropriate signs described above. For example, in the case where $x_{jn}$ is included in the above product as a positive literal, $\sigma_{jn} = +1$, and in the case where $x_{jn}$ is included in the above product as a negative literal $(1 - x_{jn})$, $\sigma_{jn} = -1$.

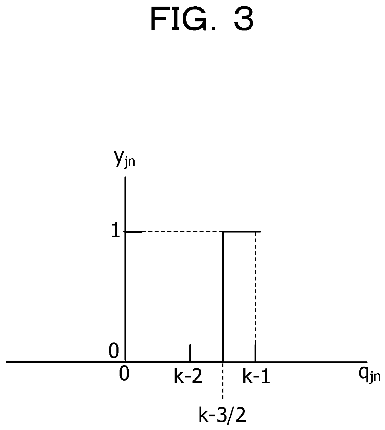

In Expression (8), $d_j$ is, for example, a predetermined constant such as $-(k - (3/2))$ (see FIG. 3).

An updated value of $h_j{}^{YX}$ due to the change in the value of $x_i$ may be represented as $h_j{}^{YX} = h_j{}^{YX} + C_{ji}\Delta x_i$.

The local field $h_i{}^{XY}$ is a second local field for the kth term and, as described above, indicates the change amount of the kth term in the case where the values of the state variables included in the kth term change. According to the first embodiment, $h_i{}^{XY}$ indicates a local field that a certain auxiliary variable generates for $x_i$. Expression (9) below may represent $h_i{}^{XY}$.

$$h_i^{XY} = \sum_{j=1}^{M} F_{ij}y_j \qquad\qquad (9)$$

In Expression (9), $y_j$ is a jth auxiliary variable out of M auxiliary variables and may be represented as $y_j = f(h_j{}^{YX})$. In this expression, f is a function representative of the input and output relationship of $y_j$.

In this expression, $F_{ij}$ indicates the strength of the influence of the jth auxiliary variable on the $x_i$. For example, the product of $Z_{<j1...jk>}$ indicated in Expression (3) above and a coefficient ($C_{ji}$) representative of the influence of $x_i$ on the jth auxiliary variable is used as $F_{ij}$.

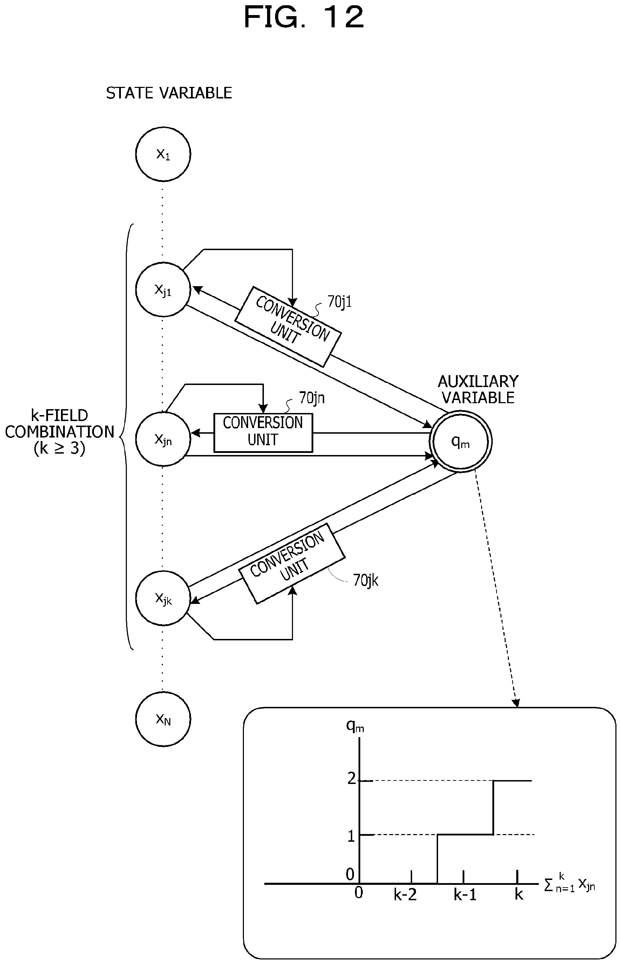

According to the first embodiment, k auxiliary variables that are values of a single bit of 0 or 1 are used corresponding to the number of k state variables ($x_{j1}$ to $x_{jk}$) included in the kth term. The auxiliary variables may be variables having a value of two or more bits. In this case, the number of the auxiliary variables may be one for k state variables (see a fourth embodiment (FIG. 12) to be described later).

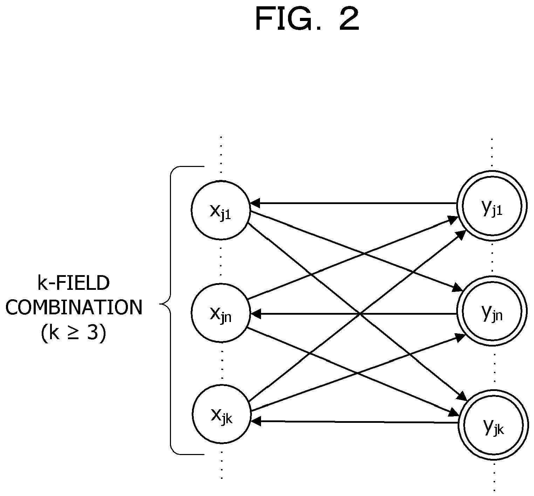

FIG. 2 illustrates an example of k auxiliary variables used corresponding to k state variables.

Each of the k auxiliary variables ($y_{j1}$ to $y_{jk}$) generates the local field ($h_{j1}{}^{XY}$ to $h_{jk}{}^{XY}$) for one of $x_{j1}$ to $x_{jk}$. Each of $y_{j1}$ to $y_{jk}$ is determined based on a total sum of the products of the values of the state variables out of $x_{j1}$ to $x_{jk}$ other than the state variable for which the local field is generated and a subset of $\sigma_{j1}$ to $\sigma_{jk}$ described above related to the state variables other than the state variable for which the local field is generated.

In FIG. 1, for simplicity of explanation, one of the auxiliary variables ($y_{jn}$) is illustrated. For $x_{jn}$, $y_{jn}$ generates a local field ($h_{jn}{}^{XY}$).

The local field ($h_{jn}{}^{XY}$) that $y_{jn}$ generates for $x_{jn}$ may be represented as $h_{jn}{}^{XY} = \sigma_{jn}Zy_{jn}$ by using $\sigma_{jn}$ and Z described above.

A function $f(h_{jn}{}^{YX})$ that determines $y_{jn}$ is a function that determines a value of $y_{jn}$ in accordance with a value of $q_{jn}$ represented by Expression (10) below.

$$q_{jn} = \sum_{l=1,l\neq n}^{k} \sigma_{jl}x_{jl} + N_{negative} \qquad\qquad (10)$$

The first term on the right side of Expression (10) is a value obtained by subtracting $\sigma_{jn}x_{jn}$ and $d_j$ from $h_{jn}{}^{YX}$ obtained based on Expression (8). The second term, $N_{negative}$ on the right side of Expression (10) is the number of state variables included in the above-described product as negative literals in the $x_{jl}$ ($l = 1$ to $k$, $l \neq jn$).

FIG. 3 illustrates the relationship between $y_{jn}$ and $q_{jn}$. The horizontal axis represents $q_{jn}$ and the vertical axis represents $y_{jn}$.

In the case of $k - 1$ at which the $q_{jn}$ is the maximum, $y_{jn}$ is 1, and in the case of smaller than $k - 1$ (in the case of $k - 2$ or smaller) $y_{jn}$ is 0. As a threshold for such determination, the $d_j$ indicated in Expression (8) is used.

In this way, $h_{jn}{}^{XY}$ representative of the change amount of the kth term in the case where the value of $x_{jn}$ changes may be obtained.

For example, as described above, the biquadratic term that generates $Z_{1234}$ in the case where the logical clause of Expression (5) is not satisfied may be represented as $Z_{1234}(1 - x_1)x_2(1 - x_3)x_4$. In the case of $jn = 1$, it may be determined that $y_1$ used for calculation of $h_1{}^{XY}$ generated for $x_1$ is 1 or 0 depending on whether $q_1 = x_2 - x_3 + x_4 + 1$ is equal to or greater than $(k - (3/2)) = 2.5$. Thus, $y_1 = f(h_1{}^{YX})$ is the same expression as $y_1 = x_2(1 - x_3)x_4$ described above. For example, in the case where $x_2 = 1$, $x_3 = 0$, and $x_4 = 1$, $q_1 = 3$ and $q_1$ is $k - 1$. Thus, $y_1 = 1$.

The storage unit 11 illustrated in FIG. 1 may store $\sigma_{j1}$ to $\sigma_{jk}$ used in the above-described calculation.

The storage unit 11 may store various types of data such as calculation conditions used when the processing unit 12 executes the method of processing data, which will be described later (for example, the number of replicas, a value of a temperature parameter set for each of the replicas, a replica exchange cycle, and a calculation end condition in the case where a replica exchange method is executed). In the case where the processing unit 12 executes part or the entirety of processing of the method of processing data, which will be described later, by using software, a program for executing the processing is stored in the storage unit 11.

For example, the processing unit 12 may be realized by using a processor that is hardware such as a central processing unit (CPU), a graphics processing unit, (GPU) or a digital signal processor (DSP). Instead, the processing unit 12 may be realized by using an electronic circuit such as an application-specific integrated circuit (ASIC) or a field-programmable gate array (FPGA).

For example, the processing unit 12 searches for a state in which the value of the evaluation function (energy) represented by Expression (3) becomes the local minimum. The optimal solution is a state having the minimum value among the local minimums of the evaluation function. By changing the sign of the evaluation function represented by Expression (3), the processing unit 12 may search for a state in which the value of the evaluation function becomes the local maximum (in this case, a state having the maximum value is the optimal solution).

FIG. 1 illustrates a flow of an example of part of processing performed by the processing unit 12.

Here, it is assumed that values based on the initial values of $x_1$ to $x_N$ are stored in the storage unit 11 as $h_i^{XX}$, $h_i^{XY}$, $h_j^{YX}$, $y_j$, and E.

The processing unit 12 selects, out of $x_1$ to $x_N$, a candidate state variable the value of which is to be changed (hereafter referred to as a flip candidate) (step S1). For example, the processing unit 12 selects a flip candidate state variable randomly or in a predetermined order. A case where $x_{jn}$ included in the kth term is selected is described below.

In the case where the value of $x_{jn}$ changes, the processing unit 12 calculates (or updates) $h_{jn}^{XY}$ based on the updated value of $h_j^{YX}$ ($= h_{jn}^{YX}$) by using the above-described method (step S2).

The processing unit 12 calculates the change amount ($\Delta E$) of the value of the evaluation function in the case where the value of $x_{jn}$ changes by using the product of $-\Delta x_{jn}$ and the sum of $h_{jn}^{XY}$ and $h_i^{XX}$ ($= h_{jn}^{XX}$) obtained based on Expression (7) (step S3).

Based on a result of comparison between $\Delta E$ and a predetermined value, the processing unit 12 determines whether to allow a change in the value of $x_{jn}$ (whether to enable or disable the flipping) (step S4). Hereinafter, this determination process is referred to as a flip determination process.

The predetermined value is, for example, a noise value obtained based on a random number and the value of a temperature parameter. The processing unit 12 determines that the change in the value of $x_{jn}$ is allowed in the case where, for example, $\Delta E$ is smaller than log (rand) $\times$ T which is an example of the noise value obtained based on a uniform random number (rand) of greater than or equal to 0 and smaller than or equal to 1 and the temperature parameter (T).

In the case where it is determined that the flip is enabled, the processing unit 12 updates the state stored in the storage unit 11 by changing the value of $x_{jn}$ and performs an updating process that updates $h_i^{XX}$, $h_i^{XY}$, $h_j^{YX}$, and y due to the change (step S5).

For example, updating of $h_i^{XX}$ (i = 1 to N) due to the change in the value of $x_{jn}$ may be performed by using the following expression: $h_i^{XX} = h_i^{XX} + W_{i,jn}\Delta x_{jn}$. For example, it is sufficient that the processing unit 12 read weight values in a jn column in a matrix W of N $\times$ N weight values.

Updating of $h_j^{YX}$ and $h_i^{XY}$ may be performed by determining updated values obtained when $h_{jn}^{XY}$ is calculated in the processing of step S2.

After the processing of step S5 or in the case where the flip is determined not to be enabled in the processing of step S4, the processing unit 12 repeatedly performs the processing from step S1 until a predetermined end condition is satisfied.

The order of the above-described processes is merely exemplary and may be changed as appropriate.

Although an example in which the processing of steps S2 to S4 is performed by selecting the flip candidate state variables one by one out of N state variables has been described in the above description, the processing of steps S2 to S4 may be performed in parallel for a plurality of (for example, all of N) state variables. In this case, when there are a plurality of state variables the values of which are allowed to be changed, the processing unit 12 selects the state variables the values of which are to be changed randomly or in accordance with a predetermined rule to perform the updating process of step S5. The parallel processing as described above increases the speed of the calculation.

In the case of performing a simulated annealing method, the processing unit 12 decreases the value of the above-described temperature parameter (T) according to a predetermined temperature parameter change schedule every time, for example, the flip determination process is repeatedly performed a predetermined number of times. The processing unit 12 outputs the state obtained in the case where the flip determination process has been repeatedly performed the predetermined number of times as a calculation result of the discrete optimization problem (for example, displays on a display device not illustrated). The processing unit 12 may update the value of the evaluation function (energy) represented by Expression (3) every time the change in the value of the state variable is generated and cause the storage unit 11 to hold the energy and the state in the case where the energy becomes the minimum energy up to that time. In this case, the processing unit 12 may output, as the calculation result, the state corresponding to the minimum energy stored after the flip determination process have been repeatedly performed the predetermined number of times.

In the case where the processing unit 12 performs the replica exchange method, the processing unit 12 performs the processing of steps S1 to S5 described above in a plurality of different replicas in which different values of the temperature parameter are set. Every time the flip determination process is repeatedly performed a predetermined number of times, the processing unit 12 performs a replica exchange. For example, the processing unit 12 randomly selects two replicas out of the plurality of replicas and exchanges the value of the temperature parameter or the state between the two selected replicas with a predetermined exchange probability based on an energy difference between the replicas and the difference in the value of the temperature parameter between the replicas. For example, the processing unit 12 updates the value of the evaluation function (energy) represented by Expression (3) every time the change in the value of the state variable is generated in each of the replicas and holds the energy and the state in the case where the energy becomes the minimum energy up to that time. The processing unit 12 outputs, as the calculation result, the state corresponding to the minimum energy in all the replicas out of the minimum energies stored after the above-described flip determination process has been repeatedly performed the predetermined number of times in each of the replicas.

With the data processing apparatus 10 and the method of processing data as described above, the change amount of the kth term in the case where the values of the state variables included in the kth term change is calculated by using the values of the auxiliary variables obtained based on the values of the state variables included in the kth term. Since the auxiliary variables are not independent variables or do not increase a solution searching space. Accordingly, the discrete optimization problem represented by a higher-order evaluation function may be calculated without increasing the number of independent variables.

Since the combination between the state variables and the auxiliary variables is represented by the coefficient ($C_{jl}$ of Expression (8) or $F_{ij}$ of Expression (9)) as described above, wiring or the like is not desired, and even when the number of auxiliary variables increases, a problem such as wiring jam does not occur.

(Second Embodiment)

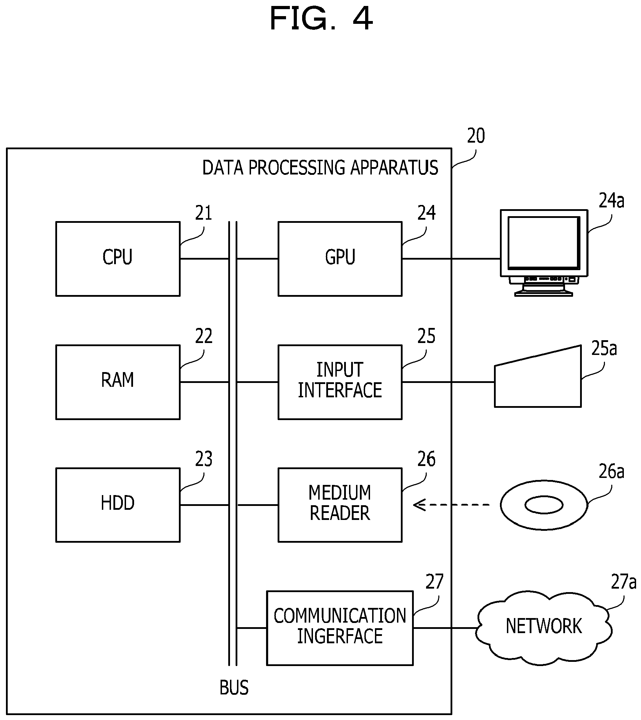

FIG. 4 is a block diagram illustrating a hardware example of a data processing apparatus according to a second embodiment.

The data processing apparatus 20 is, for example, a computer and includes a CPU 21, a random-access memory (RAM) 22, an HDD 23, a GPU 24, an input interface 25, a medium reader 26, and a communication interface 27. The above-described devices are coupled to a bus.

The CPU 21 is a processor including an arithmetic circuit that executes program instructions. The CPU 21 loads at least a subset of programs and data stored in the HDD 23 into the RAM 22 and executes the programs. The CPU 21 may include a plurality of processor cores, or the data processing apparatus 20 may include a plurality of processors. Processes to be described below may be executed in parallel by using the plurality of processors or processor cores. A set of a plurality of processors (multiprocessor) may be referred to as a "processor".

The RAM 22 is a volatile semiconductor memory that temporarily stores the programs executed by the CPU 21 or the data used for the arithmetic by the CPU 21. The data processing apparatus 20 may include a memory of a type other than the type of the RAM 22 and may include a plurality of memories.

The HDD 23 is a non-volatile storage device that stores the programs of software such as an operating system (OS), middleware, and application software, and data. Examples of the programs include a program for causing the data processing apparatus 20 to execute a process of searching for a solution to a discrete optimization problem. The data processing apparatus 20 may include another type of the storage device such as a flash memory or a solid-state drive (SSD) and may include a plurality of non-volatile storage devices.

The GPU 24 outputs images to a display 24a coupled to the data processing apparatus 20 in accordance with instructions from the CPU 21. As the display 24a, a cathode ray tube (CRT) display, a liquid crystal display (LCD), a plasma display panel (PDP), an organic electro-luminescence (OEL) display, or the like may be used.

The input interface 25 obtains an input signal from an input device 25a coupled to the data processing apparatus 20 and outputs the input signal to the CPU 21. As the input device 25a, a pointing device such as a mouse, a touch panel, a touchpad, and a trackball, as well as a keyboard, a remote controller, a button switch, or the like may be used. A plurality of types of input devices may be coupled to the data processing apparatus 20.

The medium reader 26 is a reading device that reads programs and data recorded in a recording medium 26a. As the recording medium 26a, for example, a magnetic disk, an optical disk, a magneto-optical (MO) disk, a semiconductor memory, or the like may be used. Examples of the magnetic disk include a flexible disk (FD) and an HDD. Examples of the optical disk include a compact disc (CD) and a Digital Versatile Disc (DVD).

For example, the medium reader 26 copies the programs or the data read from the recording medium 26a to another recording medium such as the RAM 22 or the HDD 23. For example, the read programs are executed by the CPU 21. The recording medium 26a may be a portable-type recording medium and, in some cases, is used to distribute the programs and the data. The recording medium 26a and the HDD 23 may be referred to as computer-readable recording media.

The communication interface 27 is an interface that is coupled to a network 27a and that communicates with another information processing apparatus via the network 27a. The communication interface 27 may be a wired communication interface coupled to a communication device such as a switch via a cable or a wireless communication interface coupled to a base station via a wireless link.

Next, the functions and a processing procedure of the data processing apparatus 20 are described.

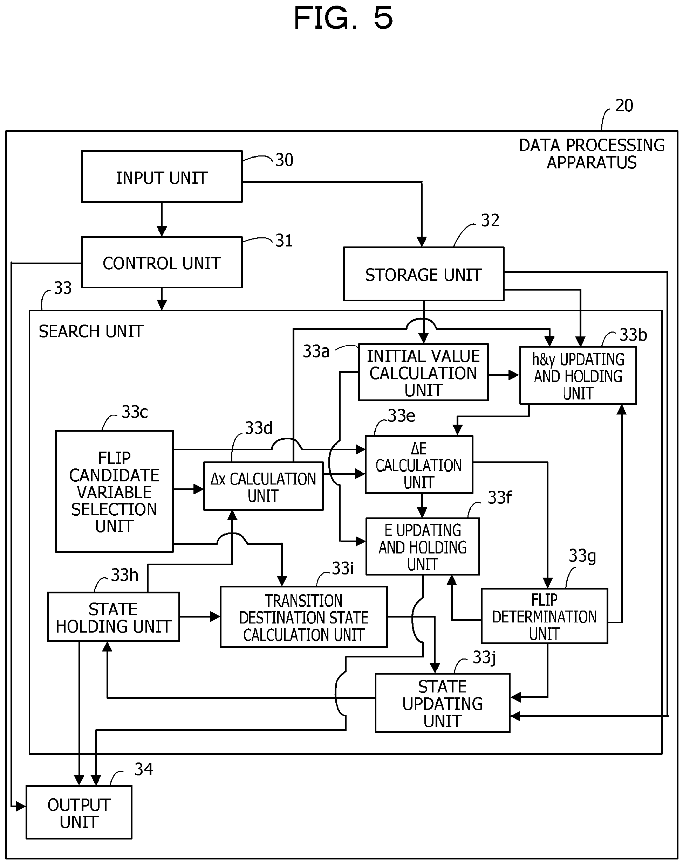

FIG. 5 is a block diagram illustrating a functional example of the data processing apparatus.

The data processing apparatus 20 includes an input unit 30, a control unit 31, a storage unit 32, a search unit 33, and an output unit 34.

The input unit 30, the control unit 31, the search unit 33, and the output unit 34 have the function of the processing unit 12 of the data processing apparatus 10 according to the first embodiment. The input unit 30, the control unit 31, the search unit 33, and the output unit 34 may be implemented by using, for example, program modules executed by the CPU 21 or a storage area

(a register or a cache memory) in the CPU 21. The storage unit 32 has the function of the storage unit 11 of the data processing apparatus 10 according to the first embodiment. The storage unit 32 may be implemented by using, for example, a storage area reserved in the RAM 22 or the HDD 23.

The input unit 30 accepts, for example, input of initial values of the state variables ($x_1$ to $x_N$), the problem information, and calculation conditions. The problem information includes, for example, the coefficients ($C_{jl}$, $d_j$) indicated in Expression (8) in addition to $Z_{<j1...jk>}$, the weight value ($W_{ij}$), and the bias coefficient ($b_i$) indicated in Expression (3). The problem information may include $F_{ij}$ that is a value obtained by multiplying $Z_{<j1...jk>}$ by $\sigma_{j1}$ to $\sigma_{jk}$ described above. Examples of the calculation conditions include, for example, the number of replicas, the replica exchange cycle, the value of the temperature parameter set for each of the replicas in the case where the replica exchange method is executed, and the temperature parameter change schedule, the calculation end condition, and so forth in the case where the simulated annealing method is performed.

These pieces of information may be input by a user operating the input device 25a or input via the recording medium 26a or the network 27a.

Based on the calculation conditions and the like, the control unit 31 controls the units in the data processing apparatus 20 to cause the units to execute processing to be described later.

The storage unit 32 stores the initial values of $x_1$ to $x_N$ and the problem information. The storage unit 32 may store various types of information such as the calculation conditions.

The search unit 33 includes an initial value calculation unit 33a, an h&y updating and holding unit 33b, a flip candidate variable selection unit 33c, a $\Delta x$ calculation unit 33d, a $\Delta E$ calculation unit 33e, and an E updating and holding unit 33f. The search unit 33 further includes a flip determination unit 33g, a state holding unit 33h, a transition destination state calculation unit 33i, and a state updating unit 33j.

The initial value calculation unit 33a reads the initial values of $x_1$ to $x_N$, $b_i$, $C_{jk}$, and $d_j$ stored in the storage unit 32 and, based on these values, calculates the initial values of $h_i^{XX}$ and $h_j^{YX}$ by using Expressions (7) and (8). Also, the initial value calculation unit 33a calculates the initial value of $y_j$ from the initial value of $h_j^{YX}$ by using the following expression: $y_j = f(h_j^{YX})$.

Furthermore, the initial value calculation unit 33a reads, for example, $F_{ij}$ stored in the storage unit 32 and calculates, based on the calculated initial value of $y_j$ and $F_{ij}$, the initial value of $h_i^{XY}$ by using Expression (6).

The h&y updating and holding unit 33b updates $h_i^{XX}$, $h_j^{YX}$, $h_i^{XY}$, and $y_j$ and holds values of these.

The updated value of $h_i^{XX}$ due to the change in the value of $x_{jn}$ may be represented by the following expression: $h_i^{XX} = h_i^{XX} + W_{i,jn}\Delta x_{jn}$. The updated value of $h_j^{YX}$ due to the change in the value of $x_{jn}$ may be represented by the following expression: $h_j^{YX} = h_j^{YX} + Q_{j,jn}\Delta x_{jn}$. The updated value of $h_i^{XY}$ due to the change in the value of $x_{jn}$ may be represented by the following expression: $h_i^{XY} = h_i^{XY} + F_{ij}\Delta y_j$. Calculation of $\Delta y_j$ is performed by using an expression $\Delta y_j = f(h_j^{YX}) - y_j$ using the updated value of $h_j^{YX}$.

The flip candidate variable selection unit 33c selects a flip candidate state variable. For example, the flip candidate variable selection unit 33c selects a flip candidate state variable randomly or in a predetermined order. The flip candidate variable selection unit 33c outputs an identification number (1 to N) of the selected flip candidate state variable.

The $\Delta x$ calculation unit 33d calculates the change amount of the value of the selected flip candidate state variable. For example, when the flip candidate state variable is $x_{jn}$, $\Delta x_{jn}$ becomes -1 in the case where $x_{jn}$ changes from 1 to 0, and $\Delta x_{jn}$ becomes 1 in the case where the state variable $x_{jn}$ changes from 0 to 1.

The $\Delta E$ calculation unit 33e calculates, based on the product of the sum of two types of local fields and the change amount of the value of the flip candidate state variable, $\Delta E$ in the case where the value of the flip candidate state variable changes. For example, when the flip candidate state variable is $x_{jn}$, $\Delta E$ is calculated by using the product of -$\Delta x_{jn}$ and the sum of $h_{jn}{}^{XY}$ and $h_{jn}{}^{XX}$ in the case where the value of $x_{jn}$ changes.

In the case where the change in the value of the flip candidate state variable is allowed by the flip determination unit 33g, the E updating and holding unit 33f updates E that is the value of the evaluation function indicated by Expression (3) based on $\Delta E$ calculated by the $\Delta E$ calculation unit 33e and holds E. The E updating and holding unit 33f may hold the smallest E out of Es having been obtained up to that time.

Based on the result of comparison between $\Delta E$ and a predetermined value, the flip determination unit 33g performs the flip determination process that determines whether to allow the change in the value of the flip candidate state variable. The predetermined value is, for example, a noise value obtained based on a random number and the value of the temperature parameter. The flip determination unit 33g determines that the change in the value of the flip candidate state variable is allowed in the case where, for example, $\Delta E$ is smaller than log (rand) $\times$ T which is an example of the noise value obtained based on a uniform random number (rand) greater than or equal to 0 and smaller than or equal to 1 and the temperature parameter (T).

The state holding unit 33h holds values of N state variables ($x_1$ to XN).

The transition destination state calculation unit 33i calculates a transition destination state in which the value of the state variable of the identification number output by the flip candidate variable selection unit 33c out of the $x_1$ to $x_N$ is changed.

In the case where the flip determination unit 33g determines that the change in the value of the state variable is allowed, the state updating unit 33j uses the transition destination state calculated by the transition destination state calculation unit 33i to update the state held by the state holding unit 33h.

Under the control of the control unit 31, the search unit 33 searches for a state in which the value of the evaluation function (energy) becomes the local minimum by repeatedly performing the flip determination process and the updating process of each parameter as described above.

The output unit 34 outputs a search result (calculation result) of the search unit 33. For example, in the case where the replica exchange method is performed, the output unit 34 outputs, as the calculation result, the state corresponding to the minimum energy in all the replicas out of the minimum energies stored after the above-described flip determination process has been repeatedly performed the predetermined number of times in each of the replicas.

For example, the output unit 34 may output and display the calculation result on the display 24a, transmit the calculation result to another information processing apparatus via the network 27a, or store the calculation result in an external storage device.

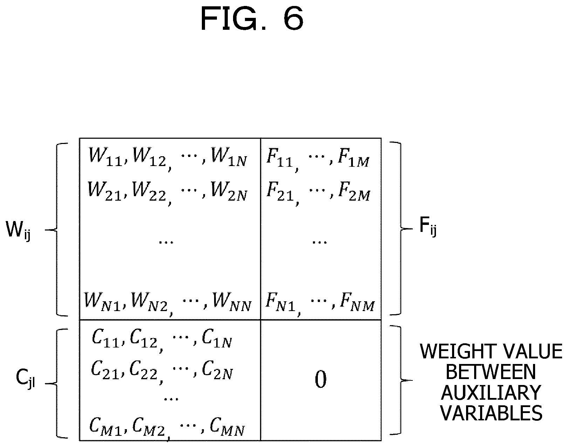

FIG. 6 illustrates an example of matrix information stored in the storage unit.

In the case where the number of the state variables and the number of the auxiliary variables included in the evaluation function of Expression (3) is N and M, respectively, $W_{ij}$ is an N $\times$ N matrix, $C_{jl}$ in Expression (8) is an M $\times$ N matrix, and $F_{ij}$ in Expression (9) is an N $\times$ M matrix. Here, $W_{ij} = W_{ji}$. According to the present embodiment, it is assumed that the weight values between the auxiliary variables is 0.

Hereinafter, the processing procedure (a method of processing data) of the data processing apparatus 20 will be described. An example in which search is performed by using the replica exchange method is described below.

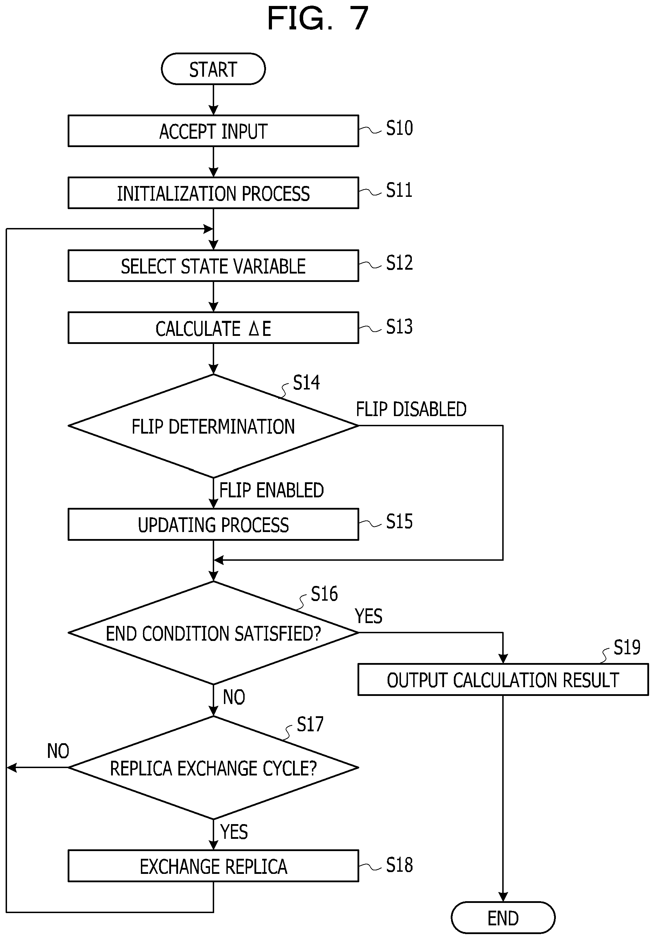

FIG. 7 is a flowchart illustrating a flow of an example of the method of processing data.

Step S10: The input unit 30 accepts input of the initial values of $x_1$ to $x_N$, the above-described problem information, and the calculation conditions. For example, the initial values of $x_1$ to $x_N$ and the problem information having been input are stored in the storage unit 32, and the calculation conditions having been input are supplied to the control unit 31.

Step S11: The initialization process is performed for each of the replicas. An example of a procedure of the initialization process will be described later.

For each of the replicas, the control unit 31 causes the search unit 33 to perform processing of steps S12 to S16 below.

Step S12: The flip candidate variable selection unit 33c of the search unit 33 selects a candidate state variable the value of which is to be changed (updated).

Step S13: The $\Delta E$ calculation unit 33e calculates $\Delta E$. Based on the product of the sum of two types of local fields and the change amount of the value of the flip candidate state variable, $\Delta E$ in the case where the value of the flip candidate state variable changes is calculated. For example, when the flip candidate state variable is $x_{jn}$, the $\Delta E$ calculation unit 33e calculates $\Delta E$ by using the product of -$\Delta x_{jn}$ and the sum of $h_{jn}{}^{XY}$ and $h_{jn}{}^{XX}$ in the case where the value of $x_{jn}$ changes.

Step S14: The flip determination unit 33g performs the flip determination based on the result of comparison between $\Delta E$ and a predetermined value. In the case where the flip determination unit 33g determines that the change in the value of the state variable is allowed, (in the case of "FLIP ENABLED"), processing of step S15 is performed. In the case where the flip determination unit 33g determines that the change in the value of the state variable is not allowed (in the case of "FLIP DISABLED"), processing of step S16 is performed.

Step S15: The updating process is performed. In the processing of step S15, the state is updated by the state updating unit 33j, $h_i^{XX}$, $h_j^{YX}$, $h_i^{XY}$, and $y_j$ are updated by the h&y updating and holding unit 33b, and E is updated by the E updating and holding unit 33f. An example of a procedure of the processing of step S15 will be described later.

Step S16: The control unit 31 determines whether the processing satisfies a predetermined end condition. For example, in the case where the number of times the search unit 33 performs the flip determination process has reached a maximum number of times of the flip determination, the control unit 31 determines that the end condition is satisfied. In the case where it is determined that the processing satisfies the predetermined end condition, processing of step S19 is performed. In the case where it is determined that the processing does not satisfy the predetermined end condition, processing of step S17 is performed.

Step S17: The control unit 31 determines whether the number of times of the flip determination indicates the replica exchange cycle. For example, in the case where a remainder of the number of times of the flip determination divided by a value indicative of the replica exchange cycle is 0, the control unit 31 determines that the number of times of the flip determination indicates the replica exchange cycle.

The control unit 31 performs processing of step S18 in the case where it is determined that the number of times of the flip determination indicates the replica exchange cycle. The control unit 31 causes the search unit 33 to repeat the processing from step S12 in the case where it is determined that the number of times of the flip determination does not indicate the replica exchange cycle.

Step S18: The control unit 31 performs a replica exchange process. For example, the control unit 31 randomly selects two replicas out of the plurality of replicas and exchanges the value of the set temperature parameter or the state between the two selected replicas with a predetermined exchange probability based on an energy difference between the replicas and the difference in the value of the temperature parameter between the replicas. After the processing of step S18, the control unit 31 causes the search unit 33 to repeat the processing from step S12.

Step S19: The output unit 34 outputs the calculation result. For example, the output unit 34 outputs, as the calculation result, the state corresponding to the minimum energy in all the replicas out of the minimum energies stored in the replicas. For example, the output unit 34 may output and display the calculation result on the display 24a, transmit the calculation result to another information processing apparatus via the network 27a, or store the calculation result in an external storage device.

Next, an example of the procedure of the initialization process of step S11 described above is described.

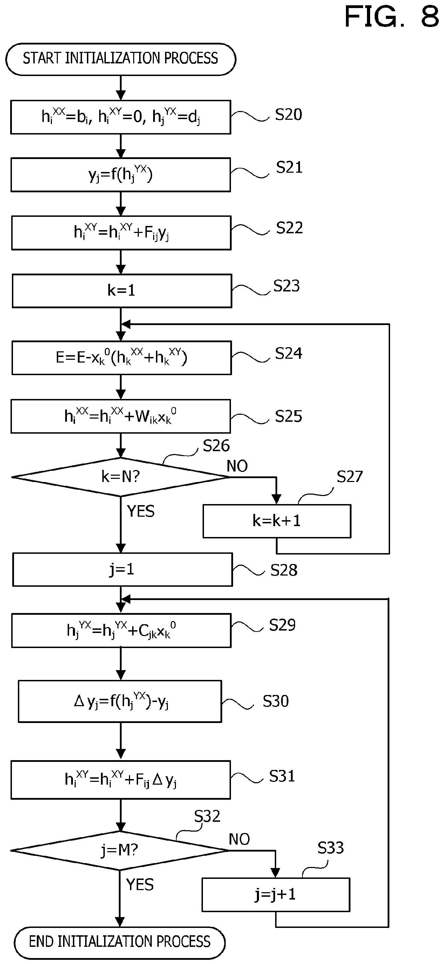

FIG. 8 is a flowchart illustrating a flow of the example of the procedure of the initialization process.

It is assumed that E is initialized to $E_0$ of Expression (3) (for example, 0).

First, the initial value calculation unit 33a sets $h_i^{XX} = b_i$, $h_i^{XY} = 0$, and $h_j^{YX} = d_j$ for $h_i^{XX}$, $h_i^{XY}$, and $h_j^{YX}$ of every i from 1 to N and every j from 1 to M (step S20). As $d_j$, for example, a value of $-(k - 3/2)$ is used in the case where the auxiliary variable $y_j$ is an auxiliary variable for a k-field combined state variable ($k \geq 3$). The value $y_j$ is determined by using $d_j$ (see FIG. 3 described above).

The initial value calculation unit 33a calculates $y_j$ of every j from 1 to M by using an expression $y_j = f(h_j^{YX})$ (step S21). After the processing of step S21, the initial value calculation unit 33a updates $h_i^{XY}$ of every i from 1 to N by using $F_{ij}y_j$ of every j from 1 to M and an expression $h_i^{XY} = h_i^{XY} + F_{ij}y_j$ (step S22).

Then, the initial value calculation unit 33a sets k that is a variable representative of the identification number of the state variable to k = 1 (step S23) and updates E by using the following expression: $E = E - x_k^0(h_k^{XX} + h_k^{XY})$ (step S24). Furthermore, the initial value calculation unit 33a updates $h_i^{XX}$ of every i from 1 to N by using the following expression: $h_i^{XX} = h_i^{XX} + W_{ik}x_k^0$ (step S25). Here, $x_k^0$ represents an initial value of the state variable with an identification number = k.

After the processing of step S25, the initial value calculation unit 33a determines whether k = N holds (step S26). In the case where it is determined that k = N does not hold, k = k + 1 is set (step S27), and the processing from step S24 is repeated.

In the case where it is determined that k = N holds, the initial value calculation unit 33a sets the variable j indicative of the identification number of the auxiliary variable as j = 1 (step S28). Hereinafter, it is assumed that the number of auxiliary variables is M.

By using an expression of $h_j^{YX} = h_j^{YX} + Q_{jk}x_k^0$, the initial value calculation unit 33a updates $h_j^{YX}$ by using $C_{jk}x_k^0$ of every k from 1 to N (step S29). For example, $C_{jk}$ related to a state variable not included in the kth term is 0, and $C_{jk}$ related to a state variable included in the kth term is +1 or -1 ($\sigma_{j1}$ to $\sigma_{jk}$ in FIG. 1). Out of the state variables included in the kth term, $C_{jk}$ related to a state variable that is a positive literal is +1, and a $C_{jk}$ related to a state variable that is a negative literal is -1.

The initial value calculation unit 33a calculates $\Delta y_j$ by using an expression of $\Delta y_j = f(h_j^{YX}) - y_j$ (step S30) and updates $h_i^{XY}$ of every i from 1 to N by using an expression of $h_i^{XY} = h_i^{XY} + F_{ij}\Delta y_j$ (step S31). The product of $C_{ji}$ and $Z_{<j1...jk>}$ in Expression (3) represents $F_{ij}$. Since $C_{ji}$ related to a state variable not included in the kth term is 0, $F_{ij}$ is also 0.

After the processing of step S31, the initial value calculation unit 33a determines whether j = M holds (step S32). In the case where it is determined that j = M does not hold, j = j + 1 is set (step S33), and the processing from step S29 is repeated.

In the case where it is determined that j = M holds, the initial value calculation unit 33a ends the initialization process.

Next, an example of the procedure of the updating process of step S15 illustrated in FIG. 7 is described.

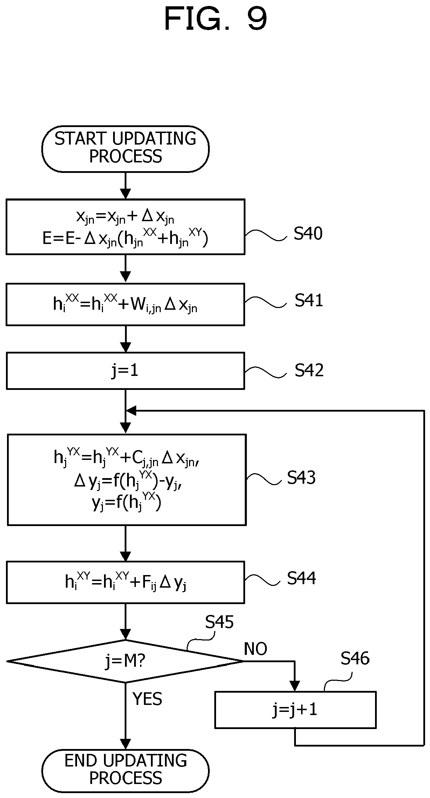

FIG. 9 is a flowchart illustrating a flow of the example of the procedure of the updating process. In FIG. 9, an example in the case where the change in the value of $x_{jn}$ is allowed is illustrated.

The state updating unit 33j uses the transition destination state calculated by the transition destination state calculation unit 33i to update the state held by the state holding unit 33h. The updated state is a state in which the value of $x_{jn}$ is changed so as to satisfy $x_{jn} = x_{jn} + \Delta x_{jn}$. The E updating and holding unit 33f updates E by using the following expression: $E = E - \Delta x_{jn}(h_{jn}^{XX} + h_{jn}^{XY})$ (step S40). Here, $-\Delta x_{jn}(h_{jn}^{XX} + h_{jn}^{XY}) = \Delta E$ and is supplied from the $\Delta E$ calculation unit 33e.

The h&y updating and holding unit 33b updates $h_i^{XX}$ of every i from 1 to N by using the following expression: $h_i^{XX} = h_i^{XX} + W_{i,jn}\Delta x_{jn}$ (step S41). Also, the h&y updating and holding unit 33b sets j = 1 (step S42) and updates $h_j^{YX}$ with an updated value of $h_j^{YX}$ (calculated when $\Delta E$ is calculated in step S13) represented by an expression of $h_j^{YX} = h_j^{YX} + C_{j,jn}\Delta x_{jn}$. Also, the h&y updating and holding unit 33b updates $\Delta y_j$ with an updated value of $\Delta y_j$ (calculated when $\Delta E$ is calculated in step S13) represented by an expression of $\Delta y_j = f(h_j^{YX}) - y_j$ (step S43). By using $h_j^{YX}$ before the updating, $y_j$ may be represented as $y_j = f(h_j^{YX})$.

Then, the h&y updating and holding unit 33b calculates the updated value of $h_i^{XY}$ of every i from 1 to N due to the change in the value of $x_{jn}$ by using the following expression: $h_i^{XY} = h_i^{XY} + F_{ij}\Delta y_j$ (step S44).

After the processing of step S44, the h&y updating and holding unit 33b determines whether j = M holds (step S45). In the case where it is determined that j = M does not hold, j = j + 1 is set (step S46), and the processing from step S43 is repeated.

In the case where it is determined that j = M, the updating process ends.

The order of the processes illustrated in FIGs. 7 to 9 is merely exemplary and may be changed as appropriate.

With the data processing apparatus 20 and the method of processing data as described above, similar effects to those of the data processing apparatus 10 and the method of processing data according to the first embodiment may be obtained. For example, the discrete optimization problem represented by a higher-order evaluation function may be calculated without increasing the number of independent variables.

As has been described, the processing content described above may be realized by causing the data processing apparatus 20 to execute a program.

The program may be recorded in a computer-readable recording medium (for example, the recording medium 26a). As the recording medium, for example, a magnetic disk, an optical disk, a magneto-optical disk, a semiconductor memory, or the like may be used. Examples of the magnetic disk include an FD and an HDD. Examples of the optical disk include a CD, a CD-recordable (R)/rewritable (RW), a DVD, and a DVD-R/RW. The program may be recorded in a portable-type recording medium to be distributed. In this case, the program may be copied from the portable-type recording medium to another recording medium (for example, the HDD 23) to be executed.

(Third Embodiment)

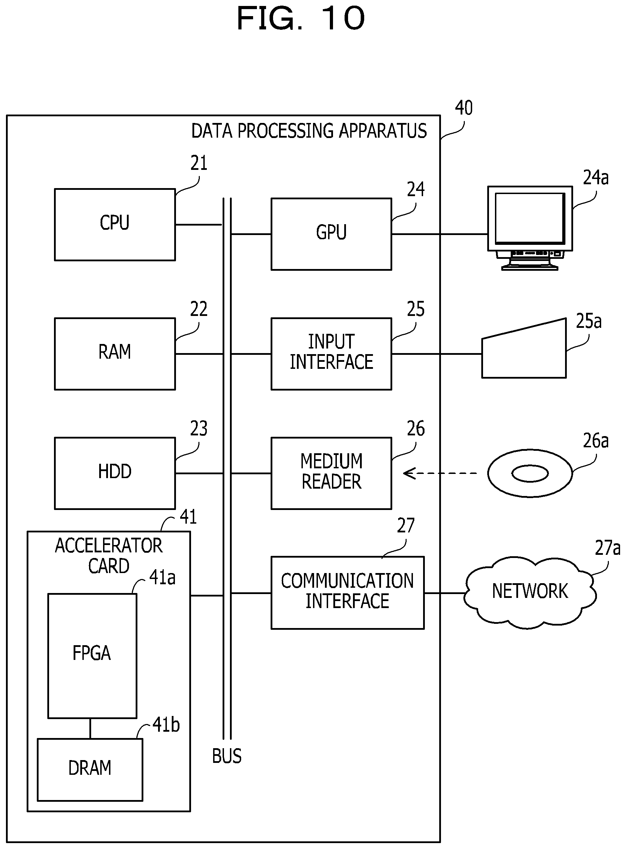

FIG. 10 illustrates an example of a data processing apparatus according to a third embodiment. In FIG. 10, the same elements as the elements illustrated in FIG. 4 are denoted by the same reference signs.

A data processing apparatus 40 according to the third embodiment includes an accelerator card 41 coupled to the bus.

The accelerator card 41 is a hardware accelerator that searches for a solution to a discrete optimization problem. The accelerator card 41 includes an FPGA 41a and a DRAM 41b.

In the data processing apparatus 40 according to the third embodiment, the FPGA 41a performs, for example, the processing of the control unit 31 and the search unit 33 illustrated in FIG. 5.

The DRAM 41b functions as the storage unit 32 illustrated in FIG. 5.

A plurality of accelerator cards 41 may be provided. In this case, for example, the processing (for example, the processing of steps S12 to S16 illustrated in FIG. 7) for the replicas may be performed in parallel.

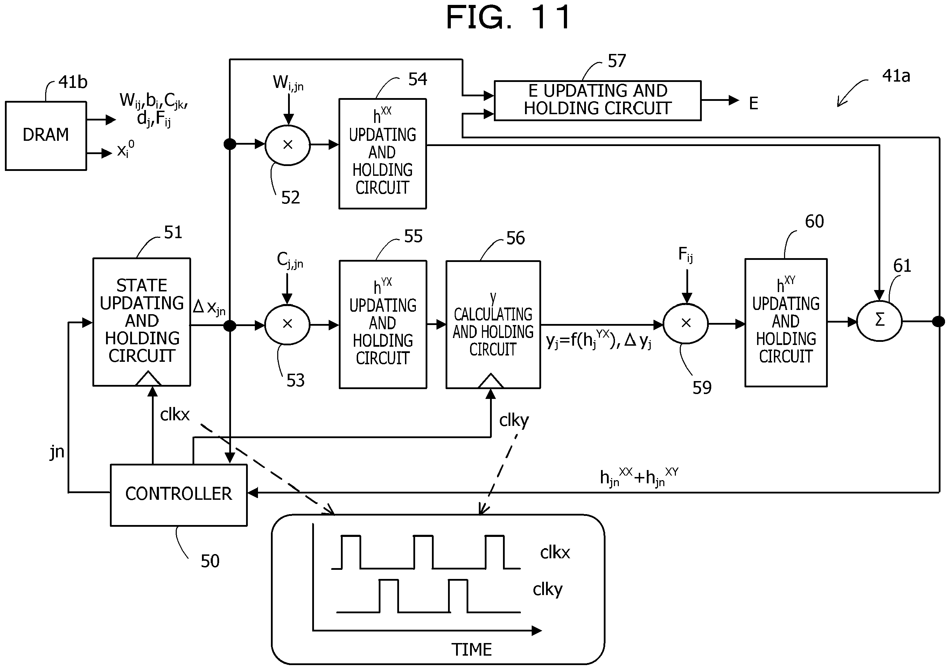

FIG. 11 illustrates a configuration of an example of an FPGA.

The FPGA 41a includes a controller 50, a state updating and holding circuit 51, multipliers 52 and 53, an $h^{XX}$ updating and holding circuit 54, an $h^{YX}$ updating and holding circuit 55, a y calculating and holding circuit 56, an E updating and holding circuit 57, a multiplier 59, an $h^{XY}$ updating and holding circuit 60, and an addition circuit 61.

The controller 50 controls portions of the FPGA 41a. For example, as illustrated in FIG. 11, the controller 50 generates and outputs clock signals (clkx, clky) for determining operation timing of the state updating and holding circuit 51 and the y calculating and holding circuit 56.

The controller 50 has the function of selecting the flip candidate state variable and the function of determining whether to allow the change in the value of the flip candidate state variable based on a result of addition of two types of local fields output by the addition circuit 61. For example, in the case where $x_{jn}$ is selected as the flip candidate state variable, the controller 50 outputs the identification number = jn. Based on $h_{jn}^{XX} + h_{jn}^{XY}$ which is the addition result output by the addition circuit 61 and $\Delta x_{jn}$ output by the state updating and holding circuit 51, the controller 50 calculates $\Delta E = -\Delta x_{jn}(h_{jn}^{XX} + h_{jn}^{XY})$. The controller 50 determines whether to allow the change in the value of $x_{jn}$ based on a result of comparison between $\Delta E$ and a noise value obtained based on a random number and the value of the temperature parameter.

The state updating and holding circuit 51 includes, for example, a register, a static random-access memory (SRAM), or the like and holds values of N state variables $x_i$ (i = 1 to N). An initial value $x_i^0$ of N state variables $x_i$ is read from the DRAM 41b and held in the state updating and holding circuit 51.

The state updating and holding circuit 51 outputs the change amount in the case where the value of the flip candidate state variable designated by the controller 50 is changed. For example, in the case where jn is designated as the identification number of the state variable, the state updating and holding circuit 51 outputs $\Delta x_{jn}$ which is the change amount of $x_{jn}$.

In the case where the state updating and holding circuit 51 receives, from the controller 50, a signal indicative of allowing the change in the value of the flip candidate state variable, the state updating and holding circuit 51 updates the state by changing the value of the state variable.

The multiplier 52 outputs the products of the change amount of the state variable and the weight values in a row or a column related to the flip candidate state variable out of the matrix W of N × N weight values $W_{ij}$ stored in the DRAM 41b. For example, in the case where the flip candidate state variable is $x_{jn}$, N weight values ($W_{i,jn}$) in the jn column out of the matrix W are read from the DRAM 41b, and the products of $\Delta x_{jn}$ and $W_{i,jn}$ are output.

The multiplier 53 outputs the products of the change amount of the state variable and the coefficients in a column related to the flip candidate state variable out of the matrix C of M × N coefficients $C_{jk}$ stored in the DRAM 41b. For example, in the case where the flip candidate state variable is $x_{jn}$, M coefficients ($C_{j,jn}$) in the jn column out of the matrix C are read from the DRAM 41b, and the products of $\Delta x_{jn}$ and $C_{j,jn}$ are output.

The $h^{XX}$ updating and holding circuit 54 includes, for example, a register, an SRAM, or the like, holds N local fields $h_i^{XX}$, and calculates updated values of N local fields $h_i^{XX}$ by adding each of N products output by the multiplier 52 to corresponding $h_i^{XX}$ out of N local fields $h_i^{XX}$. An initial value of N local fields $h_i^{XX}$, $b_i$, is read from the DRAM 41b and held in the $h^{XX}$ updating and holding circuit 54.

For example, the $h^{YX}$ updating and holding circuit 55 includes a register, an SRAM, or the like and holds M local fields $h_j^{YX}$ corresponding to the number of auxiliary variables. The $h^{YX}$ updating and holding circuit 55 calculates updated values of M local fields $h_j^{YX}$ by adding each of the M products output by the multiplier 53 to the corresponding $h_j^{YX}$ out of M local fields $h_j^{YX}$. An initial value of M local fields $h_j^{YX}$, $d_j$, is read from the DRAM 41b and held in the $h^{YX}$ updating and holding circuit 55.

The y calculating and holding circuit 56 calculates $y_j$ which is M auxiliary variables and a difference ($\Delta y_j$) from the previously calculated $y_j$. As described above, $y_j$ is determined by using the expression of $y_j = f(h_j^{YX})$. For example, the y calculating and holding circuit 56 outputs $y_{jn}$ that is a value of 0 or 1 in accordance with a result of comparison between the value of $q_{jn}$ represented by Expression (10) and $-d_j$ (for example, k - 3/2 described above).

For example, the y calculating and holding circuit 56 includes a register, an SRAM, or the like and holds M auxiliary variables $y_j$ having been calculated.

For example, the E updating and holding circuit 57 includes a register, an SRAM, or the like, holds E that is the value of the evaluation function indicated in Expression (1), and calculates an updated value of E. For example, in the case where the change in the value of $x_{jn}$ is allowed, the updated value of E is obtained by using the following expression: $E = E - (h_{jn}^{XX} + h_{jn}^{XY})\Delta x_{jn}$. As an initial value of E, $E_0$ of Expression (3) is set in the E updating and holding circuit 57.

The multiplier 59 outputs the product of $\Delta y_j$ and $F_{ij}$ read from the DRAM 41b.

The $h^{XY}$ updating and holding circuit 60 includes, for example, a register, an SRAM, or the like, holds N local fields $h_i^{XY}$, and calculates updated values of N local fields $h_i^{XY}$ by adding $F_{ij}\Delta y_j$, for each j, output by the multiplier 59 to corresponding $h_i^{XY}$ out of N local fields $h_i^{XY}$. As an initial value of N local fields $h_i^{XY}$, 0 is set in the $h^{XY}$ updating and holding circuit 60.

The addition circuit 61 outputs the addition result of the local field held by the $h^{XX}$ updating and holding circuit 54 and the local field held in the $h^{XY}$ updating and holding circuit 60. The addition result is used for the controller 50 and the E updating and holding circuit 57 to calculate $\Delta E$. In the case where the value of $x_{jn}$ changes, the addition circuit 61 outputs $h_{jn}^{XX} + h_{jn}^{XY}$ as illustrated in FIG. 1.

Also with the data processing apparatus 40 according to the third embodiment as described above, by using the FPGA 41a having the circuit configuration as illustrated in FIG. 11, the functions similar to those of the processing unit 12 of the data processing apparatus 10 according to the first embodiment are realized, and the effects similar to those of the data processing apparatus 10 according to the first embodiment are obtained.

(Fourth Embodiment)

According to the examples of the embodiments described above, it is assumed that, as illustrated in FIG. 2, k auxiliary variables that are values of a single bit of 0 or 1 are used corresponding to the number of k state variables ($x_{j1}$ to $x_{jk}$) included in the kth term. However, as described below, when the auxiliary variable is a variable having a value of two bits or more, it is sufficient that a single auxiliary variable be used for k state variables included in the kth term.

FIG. 12 illustrates an example in which an auxiliary variable having a value of two bits is used. In FIG. 12, the auxiliary variable having a two-bit value is denoted by $q_m$.

It is determined that, when the sum of k literals of $x_{j1}$ to $x_{jk}$ is k, $q_m$ is 2. It is determined that, when this sum is k - 1, $q_m$ is 1. It is determined that, when this sum is k - 2 or smaller, $q_m$ is 0. In the example illustrated in FIG. 12, k literals of $x_{j1}$ to $x_{jk}$ are all positive literals.

For example, $h_j^{YX}$ calculated as $\sigma_{j1}$ to $\sigma_{jk} = 1$, $d_m = -(k - 2)$ may be set as $q_m$. For example, in this case, $q_m = f(h_j^{YX}) = h_j^{YX}$.

The local fields ($h_{j1}^{XY}$ to $h_{jk}^{XY}$) generated for $x_{j1}$ to $x_{jk}$ by $q_m$ are converted from value of the $q_m$ by conversion units 70j1, ..., 70jn, ..., 70jk illustrated in FIG. 12.

For example, in the case where $q_m$ is 2, the constraint condition represented by the kth term is not satisfied, and accordingly, the conversion unit 70jn outputs $Z_{<j1...jk>}$ as $h_{jn}^{XY}$. In the case where $q_m$ is 1, when the literal by $x_{jn}$ is 0, the constraint condition is not satisfied in the case where the value is changed, and accordingly, the conversion unit 70jn outputs $Z_{<j1...jk>}$ as $h_{jn}^{XY}$. When the literal by $x_{jn}$ is 1, the constraint condition is satisfied in the case where the value is changed, and accordingly, the conversion unit 70jn outputs 0 as $h_{jn}^{XY}$. When the value of $x_{jn}$ is any value, in the case where $q_m$ is 0, the constraint condition is satisfied after the change, and accordingly, the conversion unit 70jn outputs 0 as $h_{jn}^{XY}$.

The conversion units 70j1 to 70jk as described above may be applied to the data processing apparatus 20 and 40 when, for example, the conversion units 70j1 to 70jk are incorporated into the h&y updating and holding unit 33b illustrated in FIG. 5 or incorporated as a logic circuit into the $h^{XY}$ updating and holding circuit 60 illustrated in FIG. 11.

When the technique as described above is used, the number of auxiliary variables may be decreased. For example, when the number of state variable groups forming a k-field combination is $m_k$, the number of auxiliary variables may be $m_k$.

(Fifth Embodiment)

Although it has been described that the state variables ($x_1$ to $x_N$) are binary variables having a value of 0 or 1 in the examples of the embodiments described above, the state variables ($x_1$ to $x_N$) may be spin variables having a value of -1 or 1.

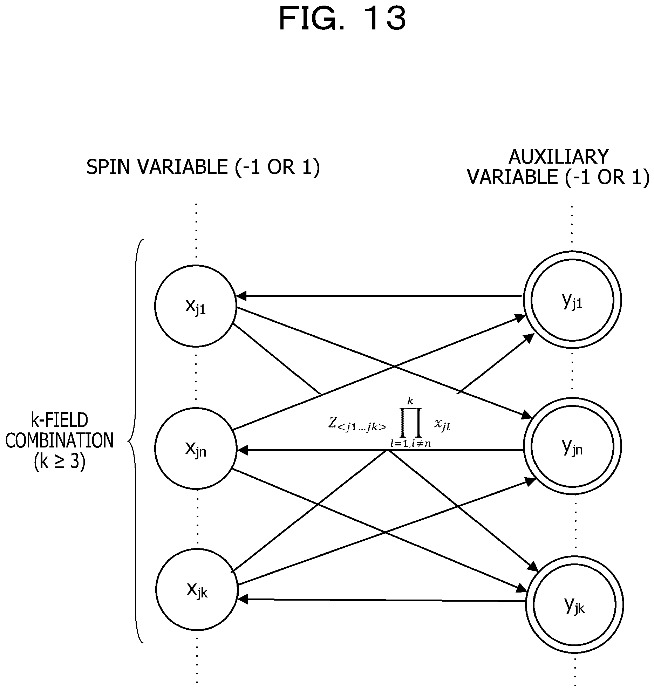

FIG. 13 illustrates an example in which spin variables are used as the state variables.

The combination relationship between $x_{j1}$ to $x_{jk}$ forming the k-field combination and $y_{j1}$ to $y_{jk}$ as the auxiliary variables is the same as that illustrated in FIG. 2.

In the case where the spin variable is used as the state variable, when changing of $\Delta x_i$ is performed as $\Delta x_i = -x_i - x_i = -2x_i$, calculations at the time of updating the energy and $h_i^{XX}$ similarly to those in the case where the binary variable is used (see steps S40 and S41 illustrated in FIG. 9) may be performed.

However, $f(h_j^{YX})$ for calculation of $h_i^{XY}$ is different from that in the case where the binary variable is used. Since a sign is included in the spin variable, for example, $h_{jn}^{XY}$ generated when $y_{jn}$ which is an auxiliary variable is 1 for $x_{jn}$ which is a state variable included in the kth term may be represented by Expression (11) below without using a coefficient representative of the sign (corresponding to $\sigma_{j1}$ to $\sigma_{jk} = 1$).

$$Z_{<j1...jk>} \prod_{l=1, l \neq n}^{k} x_{jl} \qquad (11)$$

In Expression (11), $-Z_{<j1...jk>}$ is used when the number of state variables having a value of -1 out of the state variables of $x_{j1}$ to $x_{jk}$ except for $x_{jn}$ is an odd number and $Z_{<j1...jk>}$ is used when this number is an even number. To generate such $h_{jn}^{XY}$, it is sufficient that Expression (12) below be used as $h_{jn}^{YX}$ in $y_{jn} = f(h_{jn}^{YX})$.

$$h_{jn}^{YX} = \begin{cases} \frac{1}{2} \sum_{l=1,l\neq n}^{k} x_{jl} & for \quad odd \quad k \\ \frac{1}{2} \sum_{l=1,l\neq n}^{k} x_{jl} - \frac{1}{2} & for \quad even \quad k \end{cases} \qquad (12)$$

In the case where k is an odd number, an expression on the upper side of Expression (12) is used, and in the case where k is an even number, an expression on the lower side of Expression (12) is used. Regarding $f(h_{jn}^{YX})$, $f(h_{jn}^{YX})$ becomes a function that outputs -1 since, when $h_{jn}^{YX}$ is an even number, the number of the state variables having a value of -1 out of $x_{j1}$ to $x_{jk}$ except for $x_{jn}$ is an odd number and becomes a function that outputs +1 when $h_{jn}^{YX}$ is an odd number.

When such $y_{jn} = f(h_{jn}^{YX})$ is used, $h_{jn}^{XY}$ may be represented as $h_{jn}^{XY} = Z_{<j1...jk>}y_{jn}$.

When the method of calculating $h_{jn}^{XY}$ and the like are changed as described above, the spin variables may be handled as the state variables. When the spin variables are able to be handled, for example, the following effects may be obtained.

In the case where a problem originally formulated by using the spin variable is converted into a problem using the binary variable, the number of coefficients may increase. For example, in the case where a cubic evaluation function by the spin variable is converted into an evaluation function by the binary variable, the number of coefficients may increase due to generation of quadratic and linear terms by the conversion.

Directly handling the spin variable may decrease an increase in coefficient due to the conversion and the memory capacity for storing the coefficient.

Examples of the problem formulated by using the spin variable include, for example, problems related to quantum chemistry calculation. In quantum chemical calculation, when a Hamiltonian of a ground state of an electron system is expanded with the spin variable, a form including a higher-order spin product is obtained.

(Sixth Embodiment)

As is the case with the fourth embodiment, even when the spin variable is used, the number of auxiliary variables used for k state variables included in the kth term may be one.

Since $x_{jl}$ is a spin variable in Expression (11) and $x_{jl}^2 = 1$, Expression (11) may be transformed as presented by Expression (13) below.

$$Z_{<j1...jk>} \prod_{l=1,l\neq n}^{k} x_{jl} = Z_{<j1...jk>}x_{jn} \prod_{l=1}^{k} x_{jl} \qquad (13)$$
$$= Z_{<j1...jk>}x_{jn}q_m$$

For example, $h_{jn}^{XY}$ for $x_{jn}$ may be calculated by generating $q_m$ which is one auxiliary variable and multiplying $q_m$ by $Z_{<j1...jk>}x_{jn}$. After the initial value (+1 or -1) has been set, $q_m$ is updated by inverting the sign every time any of values of $x_{j1}$ to $x_{jk}$ changes. When the value of $x_{jn}$ changes, $h_{jn}^{XY}$ does not change, $h_{j1}^{XY}$ to $h_{jk}^{XY}$ for $x_{j1}$ to $x_{jk}$ other than $x_{jn}$ change, and the changed part is $Z_{<j1...jk>}x_{j1}\Delta q_m$ to $Z_{<j1...jk>}x_{jk}\Delta q_m$.

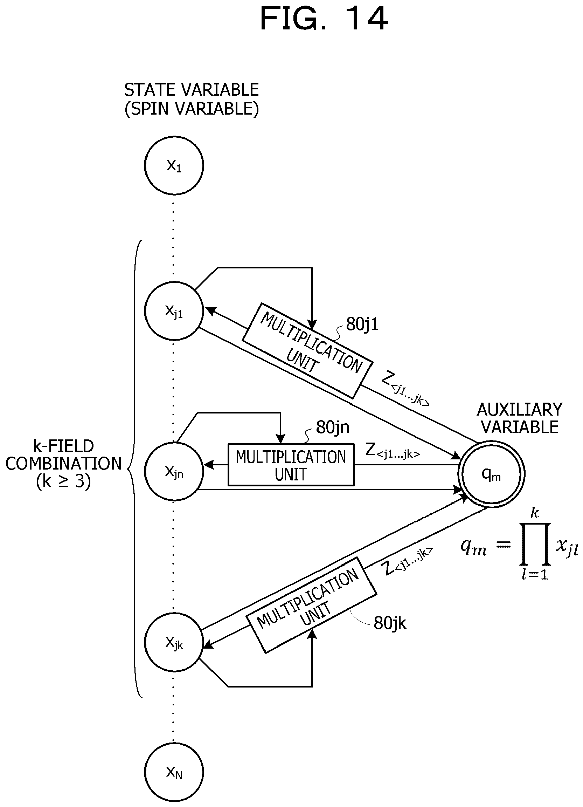

FIG. 14 illustrates an example in which the number of the auxiliary variables used for the state variables that are k spin variables included in the kth term is one.

The local fields ($h_{j1}^{XY}$ to $h_{jk}^{XY}$) generated for the $x_{j1}$ to $x_{jk}$ by $q_m$ are obtained by multiplying $Z_{<j1...jk>}q_m$ by the values of the $x_{j1}$ to $x_{jk}$ by using multiplication units 80j1, ..., 80jn, ..., 80jk illustrated in FIG. 14.

The multiplication units 80j1 to 80jk as described above may be applied to the data processing apparatus 20 and 40 when, for example, the multiplication units 80j1 to 80jk are incorporated into the h&y updating and holding unit 33b illustrated in FIG. 5 or incorporated as a logic circuit (multiplier) into the $h^{XY}$ updating and holding circuit 60 illustrated in FIG. 11.

When the technique as described above is used, the auxiliary variable may be generated as a neuron of multiple inputs and multiple outputs for one kth order combination. When a set of $Z_{<j1...jk>}$ and the identification numbers (j1 to jk) of the state variables included in the kth term are read from the memory (for example, the storage unit 32 or the DRAM 41b) once, the local fields ($h_{j1}^{XY}$ to $h_{jk}^{XY}$) for $x_{j1}$ to $x_{jk}$ may be calculated.

(Seventh Embodiment)

Although it is assumed in the examples of the embodiments described above that the auxiliary variables (such as $y_{j1}$ to $y_{jk}$ illustrated in FIG. 2) are used in a single layer and the weight values between the auxiliary variables is 0 as illustrated in FIG. 6, the auxiliary variables may be used in a plurality of layers as described below.

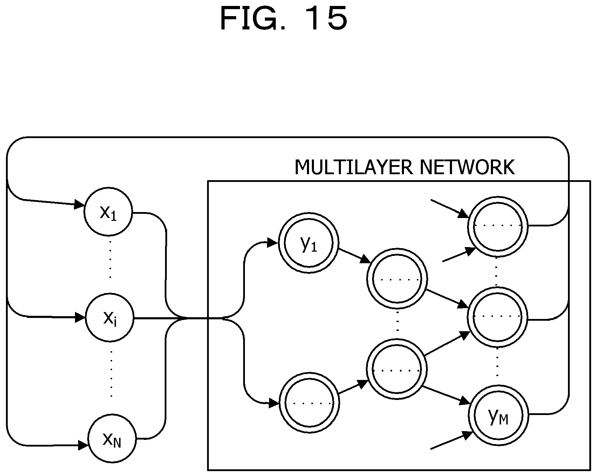

FIG. 15 illustrates an example in which a plurality of auxiliary variables are used in a plurality of layers. In the example illustrated in FIG. 15, the auxiliary variables of $y_1$ to $y_M$ form a multilayer network.

By setting the initial value and the weight value, $y_1$ to $y_M$ may also function as a single-layer auxiliary variable group (or a single auxiliary variable) that causes the state variables included in the above-described kth term to generate local fields related to the kth term.

Furthermore, as illustrated in FIG. 15, when $y_1$ to $y_M$ is formed in a plurality of layers and the weight value between $y_1$ to $y_M$ is set, not only a higher-order term but also a more usual cost function may be handled.

(Calculation Example)

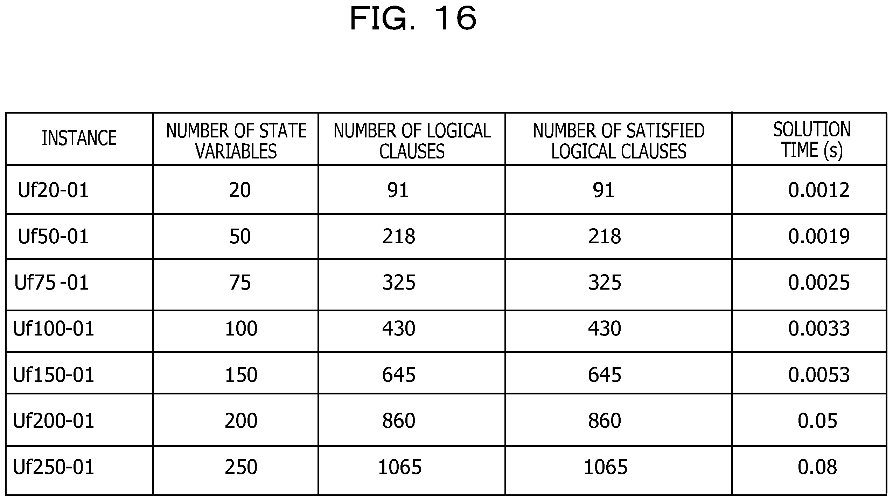

FIG. 16 illustrates an example of calculation results.

FIG. 16 illustrates an example in which a SAT-type discrete optimization problem with a known solution (seven instances in FIG. 16) is calculated by using the data processing apparatus 20 as described in the second embodiment. In each of the instances, the number of state variables included in the evaluation function is different from the number of logical clauses of higher-order terms. According to the example of the calculation results illustrated in FIG. 16, all the logical clauses in all the seven instances are satisfied, and the solutions are obtained by the amounts of time indicated by "SOLUTION TIME (s)".

Although aspects of the data processing apparatus, the program, and the method of processing data according to the present disclosure have been described above based on the embodiments, the embodiments are merely exemplary and not limited to the above description.

**Claims**

1. A data processing apparatus of searching for a combination of values of a plurality of state variables with which a value of an evaluation function which includes the plurality of state variables becomes a local minimum or a local maximum, the data processing apparatus comprising:

   a storage device configured to store a first coefficient indicating a magnitude of interaction between k state variables (k is an integer of greater than or equal to three) out of the plurality of state variables included in a kth order term of the evaluation function; and
   a processor configured to perform processing including:

   calculating a first local field indicative of a change amount of the kth order term in a case where a value of a first state variable out of the k state variables changes based on a value of a first variable and the first coefficient read from the storage device, the value of the first variable being a value obtained based on values of the k state variables and a plurality of second coefficients respectively representative of influences of the k state variables on the first variable; and
   determining, based on a result of comparison, whether to allow a change in the value of the first state variable, the result of the comparison being obtained by comparing between a predetermined value and a product of a sum of the first local field and a second local field indicative of a change amount of quadratic and lower-order terms of the evaluation function in the case where the value of the first state variable changes and a change amount of the first state variable.

2. The data processing apparatus according to claim 1, wherein
   the plurality of second coefficients are -1 or 1.

3. The data processing apparatus according to claim 1 or 2, wherein

   the value of the first variable is determined for each of the k state variables, and wherein
   the value of the first variable determined for the first state variable is determined based on a total sum of products of values of second state variables, out of the k state variables, other than the first state variable and second coefficients related to the second state variables out of the plurality of second coefficients.

4. The data processing apparatus according to claim 3, wherein
   the first local field is a product of a third coefficient, out of the plurality of second coefficients, related to the first state variable, the value of the first variable determined for the first state variable, and the first coefficient.

5. The data processing apparatus according to claim 1 or 2, wherein

a value of the first variable common to the k state variables is determined, wherein
it is determined that the value of the first variable determined for the first state variable is 2 when a sum of k literals with the k state variables is k,
it is determined that the value of the first variable determined for the first state variable is 1 when the sum of the k literals with the k state variables is k -1, and
it is determined that the value of the first variable determined for the first state variable is 0 when the sum of the k literals with the k state variables is smaller than or equal to k - 2, and wherein
the processing unit sets the first local field as the first coefficient when the value of the first variable is 2,
the processing unit sets the first local field as the first coefficient when the value of the first variable is 1 and a literal with the first state variable is 0,
the processing unit sets the first local field to 0 when the value of the first variable is 1 and the literal with the first state variable is 1, and
the processing unit sets the first local field to 0 when the value of the first variable is 0.

6. The data processing apparatus according to claim 1, wherein

each of the plurality of state variables has a value of -1 or 1, and the first variable has a value of -1 or 1, wherein
the processing unit determines the value of the first variable for each of the k state variables, and wherein
the first local field for the first state variable is a product of an infinite product of the values of the second state variables, out of the k state variables, other than the first state variable, the first coefficient, and the first variable.

7. The data processing apparatus according to claim 1, wherein

each of the plurality of state variables has a value of -1 or 1, and the first variable has a value of -1 or 1, and wherein
the processing unit calculates
the value of the first variable common to the k state variables with an infinite product of the values of the k state variables and
the first local field for the first state variable with a product of the value of the first variable, the first coefficient, and the value of the first state variable.

8. A program of searching for a combination of values of a plurality of state variables with which a value of an evaluation function which includes the plurality of state variables becomes a local minimum or a local maximum, the program including instructions which, when the program is executed by a computer, cause the computer to execute processing, the processing comprising:

obtaining a first coefficient from a storage device that stores the first coefficient representative of a magnitude of interaction between k state variables (k is an integer of greater than or equal to three) out of the plurality of state variables included in a kth order term of the evaluation function;
calculating a first local field indicative of a change amount of the kth order term in a case where a value of a first state variable out of the k state variables changes based on a value of a first variable and the first coefficient read from the storage device, the value of the first variable being a value obtained based on values of the k state variables and a plurality of second coefficients respectively representative of influences of the k state variables on the first variable; and
determining, based on a result of comparison, whether to allow a change in the value of the first state variable, the result of the comparison being obtained by comparing between a predetermined value and a product of a sum of the first local field and a second local field indicative of a change amount of quadratic and lower-order terms of the evaluation function in the case where the value of the first state variable changes and a change amount of the first state variable.

9. A computer-implemented method of searching for a combination of values of a plurality of state variables with which a value of an evaluation function which includes the plurality of state variables becomes a local minimum or a local maximum, the method comprising:

obtaining a first coefficient from a storage device that stores the first coefficient representative of a magnitude of interaction between k state variables (k is an integer of greater than or equal to three) out of the plurality of state variables included in a kth order term of the evaluation function;

calculating a first local field indicative of a change amount of the kth order term in a case where a value of a first state variable out of the k state variables changes based on a value of a first variable and the first coefficient read from the storage device, the value of the first variable being a value obtained based on values of the k state variables and a plurality of second coefficients respectively representative of influences of the k state variables on the first variable; and

determining, based on a result of comparison, whether to allow a change in the value of the first state variable, the result of the comparison being obtained by comparing between a predetermined value and a product of a sum of the first local field and a second local field indicative of a change amount of quadratic and lower-order terms of the evaluation function in the case where the value of the first state variable changes and a change amount of the first state variable.

# FIG. 1

STATE VARIABLE

$x_1$

$x_{j1}$    $C_{jn,j1} = \sigma_{j1}$    AUXILIARY VARIABLE

k-FIELD COMBINATION $(k \geq 3)$

$x_{jn}$    $F_{jn,jn} = \sigma_{jn}Z$    $y_{jn}$

$x_{jk}$    $C_{jn,jk} = \sigma_{jk}$

$\sigma_{j1} \sim \sigma_{jk} = -1$, or 1

$x_N$

S1   SELECT FLIP CANDIDATE VARIABLE $(x_{jn})$

S2   CALCULATE $h_{jn}{}^{XY}$

S3   CALCULATE $\Delta E$

S4   FLIP ENABLED?   NO

YES

S5   UPDATING PROCESS

$$h_i^{XX} = \sum_{l=1}^{N} W_{il}\, x_l + b_i \qquad h_i^{XY} = \sum_{j=1}^{M} F_{ij}\, y_j \qquad y_j = f\left(h_j^{YX}\right)$$

$$h_j^{YX} = \sum_{l=1}^{N} C_{jl}\, x_l + d_j \xrightarrow{\overset{x_i}{\text{CHANGES}}} h_j^{YX} = h_j^{YX} + C_{ji}\Delta x_i$$

$$E = -\sum_{<j1\ldots jk>} Z_{<j1\ldots jk>} x_{j1} \ldots x_{jk} - \sum_{<ij>} W_{ij} x_i x_j - \sum_i b_i x_i + E_0$$

kTH TERM

$$\Delta E = -\left(h_{jn}^{XX} + h_{jn}^{XY}\right) \cdot \Delta x_{jn}$$

10   DATA PROCESSING APPARATUS

11   STORAGE UNIT

12   PROCESSING UNIT

PROBLEM INFORMATION $(Z, W_{ij}, b_i, d_j)$

STATE    LOCAL FIELD

# FIG. 2

k-FIELD
COMBINATION
$(k \geq 3)$

# FIG. 3

# FIG. 4

DATA PROCESSING APPARATUS 20

| CPU 21 | | GPU 24 | — | 24a |
| RAM 22 | | INPUT INTERFACE 25 | — | 25a |
| HDD 23 | | MEDIUM READER 26 | ← | 26a |
| | | COMMUNICATION INGERFACE 27 | — | NETWORK 27a |

BUS

# FIG. 5

# FIG. 6

$$W_{ij} \left\{ \begin{array}{cc} \begin{array}{l} W_{11}, W_{12}, \cdots, W_{1N} \\ W_{21}, W_{22}, \cdots, W_{2N} \\ \quad \cdots \\ W_{N1}, W_{N2}, \cdots, W_{NN} \end{array} & \begin{array}{l} F_{11}, \cdots, F_{1M} \\ F_{21}, \cdots, F_{2M} \\ \quad \cdots \\ F_{N1}, \cdots, F_{NM} \end{array} \end{array} \right\} F_{ij}$$

$$C_{jl} \left\{ \begin{array}{cc} \begin{array}{l} C_{11}, C_{12}, \cdots, C_{1N} \\ C_{21}, C_{22}, \cdots, C_{2N} \\ \quad \cdots \\ C_{M1}, C_{M2}, \cdots, C_{MN} \end{array} & 0 \end{array} \right\}$$

WEIGHT VALUE BETWEEN AUXILIARY VARIABLES

# FIG. 7

```
            ┌─────────┐
            │  START  │
            └─────────┘
                 │
                 ▼
      ┌────────────────────┐
      │   ACCEPT INPUT     │─── S10
      └────────────────────┘
                 │
                 ▼
      ┌────────────────────┐
      │ INITIALIZATION     │─── S11
      │    PROCESS         │
      └────────────────────┘
                 │
                 ▼
      ┌────────────────────┐
      │ SELECT STATE       │─── S12
      │    VARIABLE        │
      └────────────────────┘
                 │
                 ▼
      ┌────────────────────┐
      │   CALCULATE ΔE     │─── S13
      └────────────────────┘
                 │
                 ▼
           ╱─────────╲         S14
          ╱  FLIP     ╲   FLIP DISABLED
          ╲ DETERMINATION╱─────────────┐
           ╲───────────╱                │
                 │ FLIP ENABLED         │
                 ▼                      │
      ┌────────────────────┐            │
      │ UPDATING PROCESS   │─── S15     │
      └────────────────────┘            │
                 │◄─────────────────────┘
                 ▼
           ╱─────────╲         S16
          ╱   END     ╲     YES          ┌──────────────────────────┐
          ╲ CONDITION  ╱──────────────►  │ OUTPUT CALCULATION RESULT│── S19
          ╲ SATISFIED?╱                  └──────────────────────────┘
           ╲─────────╱                              │
                 │ NO                               │
                 ▼                                  │
           ╱─────────╲         S17                  │
   NO     ╱  REPLICA  ╲                             │
  ◄───────╲ EXCHANGE   ╱                            │
          ╲  CYCLE?   ╱                             │
           ╲─────────╱                              │
                 │ YES                              ▼
                 ▼                            ┌─────────┐
      ┌────────────────────┐                  │   END   │
      │  EXCHANGE REPLICA  │─── S18           └─────────┘
      └────────────────────┘
```

# FIG. 8

START INITIALIZATION PROCESS

$h_i^{XX}=b_i$, $h_i^{XY}=0$, $h_j^{YX}=d_j$ — S20

$y_j=f(h_j^{YX})$ — S21

$h_i^{XY}=h_i^{XY}+F_{ij}y_j$ — S22

$k=1$ — S23

$E=E-x_k^0(h_k^{XX}+h_k^{XY})$ — S24

$h_i^{XX}=h_i^{XX}+W_{ik}x_k^0$ — S25

S26 — $k=N?$ — NO — S27 — $k=k+1$

YES

$j=1$ — S28

$h_j^{YX}=h_j^{YX}+C_{jk}x_k^0$ — S29

$\Delta y_j=f(h_j^{YX})-y_j$ — S30

$h_i^{XY}=h_i^{XY}+F_{ij}\Delta y_j$ — S31

S32 — $j=M?$ — NO — S33 — $j=j+1$

YES

END INITIALIZATION PROCESS

# FIG. 9

START UPDATING PROCESS

$$x_{jn} = x_{jn} + \Delta x_{jn}$$
$$E = E - \Delta x_{jn}(h_{jn}^{XX} + h_{jn}^{XY})$$ — S40

$$h_i^{XX} = h_i^{XX} + W_{i,jn}\Delta x_{jn}$$ — S41

$$j = 1$$ — S42

$$h_j^{YX} = h_j^{YX} + C_{j,jn}\Delta x_{jn},$$
$$\Delta y_j = f(h_j^{YX}) - y_j,$$
$$y_j = f(h_j^{YX})$$ — S43

$$h_i^{XY} = h_i^{XY} + F_{ij}\Delta y_j$$ — S44

S45

$$j = M?$$ — NO — S46

$$j = j+1$$

YES

END UPDATING PROCESS

# FIG. 10

DATA PROCESSING APPARATUS 40

21 CPU

24 GPU — 24a

22 RAM

25 INPUT INTERFACE — 25a

23 HDD

26 MEDIUM READER — 26a

41 ACCELERATOR CARD

41a FPGA

41b DRAM

27 COMMUNICATION INTERFACE — 27a NETWORK

BUS

FIG. 11

# FIG. 12

STATE VARIABLE

$x_1$

$x_{j1}$

CONVERSION UNIT — 70j1

k-FIELD COMBINATION ($k \geq 3$)

$x_{jn}$

CONVERSION UNIT — 70jn

AUXILIARY VARIABLE

$q_m$

CONVERSION UNIT — 70jk

$x_{jk}$

$x_N$

$q_m$

2

1

0

0   k-2   k-1   k   $\sum_{n=1}^{k} x_{jn}$

# FIG. 13

# FIG. 14

STATE VARIABLE
(SPIN VARIABLE)

$x_1$

$x_{j1}$

MULTIPLICATION UNIT — 80j1

$Z_{<j1...jk>}$

$x_{jn}$

MULTIPLICATION UNIT — 80jn

$Z_{<j1...jk>}$

AUXILIARY VARIABLE

$q_m$

k-FIELD COMBINATION
(k ≥ 3)

$Z_{<j1...jk>}$

MULTIPLICATION UNIT — 80jk

$x_{jk}$

$$q_m = \prod_{l=1}^{k} x_{jl}$$

$x_N$

# FIG. 15

MULTILAYER NETWORK

# FIG. 16

| INSTANCE | NUMBER OF STATE VARIABLES | NUMBER OF LOGICAL CLAUSES | NUMBER OF SATISFIED LOGICAL CLAUSES | SOLUTION TIME (s) |
|---|---|---|---|---|
| Uf20-01 | 20 | 91 | 91 | 0.0012 |
| Uf50-01 | 50 | 218 | 218 | 0.0019 |
| Uf75-01 | 75 | 325 | 325 | 0.0025 |
| Uf100-01 | 100 | 430 | 430 | 0.0033 |
| Uf150-01 | 150 | 645 | 645 | 0.0053 |
| Uf200-01 | 200 | 860 | 860 | 0.05 |
| Uf250-01 | 250 | 1065 | 1065 | 0.08 |

Europäisches
Patentamt

European
Patent Office

Office européen
des brevets

## EUROPEAN SEARCH REPORT

Application Number

EP 22 17 7784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/049475 A1 (KOYAMA JUMPEI [JP]) 18 February 2021 (2021-02-18) * paragraph [0030] – paragraph [0039] * ----- | 1-9 | INV. G06N5/00 G06N7/00 |

TECHNICAL FIELDS
SEARCHED      (IPC)

G06N
G06Q
G06F

The present search report has been drawn up for all claims

| Place of search | Date of completion of the search | Examiner |
|---|---|---|
| The Hague | 1 December 2022 | Falco, Gabriele |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 17 7784

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2022

| Patent document cited in search report | | Publication date | Patent family member(s) | | Publication date |
|---|---|---|---|---|---|
| US 2021049475 | A1 | 18-02-2021 | CN 112394756 | A | 23-02-2021 |
| | | | EP 3779616 | A1 | 17-02-2021 |
| | | | JP 2021033341 | A | 01-03-2021 |
| | | | US 2021049475 | A1 | 18-02-2021 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2020204928 A

**Non-patent literature cited in the description**

• **R. XIA et al.** Electronic Structure Calculations and the Ising Hamiltonian. *J. Phys. Chem. B,* 2017, vol. 122 (13), 3384-3395